# EUROPEAN PATENT APPLICATION

(11) **EP 3 787 233 A1**
(43) Date of publication of application: **03.03.2021**
(21) Application number: 19811179.1
(22) Date of filing: 15.05.2019
(51) Int. Cl.: H04L 12/24

(54) **NETWORK FAILURE ANALYSIS METHOD AND APPARATUS**

(30) Priority: 29.05.2018 CN 201810526345
(71) Applicant: HUAWEI TECHNOLOGIES CO., LTD., Shenzhen, Guangdong 518129 (CN); University of Science and Technology of China, Anhui 230026 (CN)
(72) Inventor: SONG, Ping, Shenzhen, Guangdong 518129 (CN); LING, Qiang, Hefei, Anhui 230027 (CN); CHEN, RenAi, Hefei, Anhui 230027 (CN); JI, Weiliang, Hefei, Anhui 230027 (CN)
(74) Representative: Thun, Clemens
(86) International application number: PCT/CN2019/087100
(87) International publication number: WO 2019/228190

(57) **Abstract**

This application provides a network fault analysis method and apparatus, to perform fault analysis on a network element device based on an NF service. The method includes the following steps: A fault detection network element obtains log data that is generated by a to-be-detected network element in past specified duration. After obtaining the log data, the fault detection network element determines, based on the obtained log data, a log feature corresponding to the log data, and searches, in a fault relational database, for a fault type corresponding to the log feature. After detecting the fault type, the fault detection network element sends the found fault type to a policy control network element, so that the policy control network element can determine a corresponding recovery measure based on the fault type, and the to-be-detected network element can process, by using the recovery measure, a fault that occurs.

## Description

This application claims priority to Chinese Patent Application No. 201810526345.9, filed with the Chinese Patent Office on May 29, 2018 and entitled "NETWORK FAULT ANALYSIS METHOD AND APPARATUS", which is incorporated herein by reference in its entirety.

### TECHNICAL FIELD

This application relates to the field of communications technologies, and in particular, to a network fault analysis method and apparatus.

### BACKGROUND

As networks evolve, a trend of network management also changes accordingly, developing toward a direction of being comprehensive, distributed, and intelligent. Through various network functions, the networks can implement network resource planning, construction, and optimization through network analysis. A concept function of a network function (Network Function, NF) service is explicitly proposed in a 5G standard. In a 3GPP document, the NF service is described, but a network analysis function of an NWDAF is not defined in a standard. In addition, network functions to be implemented in a 5G network, how to implement these functions, how to control and communicate with these functions, and the like, are not specifically defined in the 3GPP document. Therefore, no solution is available for performing fault analysis on a network element device based on the NF service at present.

### SUMMARY

This application provides two network fault analysis methods and apparatuses, to perform fault analysis on a network element device based on an NF service.

According to a first aspect, this application provides a network fault detection method. The method includes the following steps: A fault detection network element obtains log data that is generated by a to-be-detected network element in past specified duration. After obtaining the log data, the fault detection network element determines, based on the obtained log data, a log feature corresponding to the log data, and searches, in a fault relational database including association relationships between different fault types and log features, for a fault type corresponding to the log feature. After detecting the fault type, the fault detection network element sends the found fault type to a policy control network element, so that the policy control network element can determine a corresponding recovery measure based on the fault type, and the to-be-detected network element can process, by using the recovery measure, a fault that occurs. In this embodiment of this application, a fault detection function may be implemented in a 5G network, and a network fault analysis architecture including the policy control network element and the fault detection network element is provided. Based on the architecture, the fault detection network element may determine the fault type based on the obtained log data, and send the detected fault type to the policy control network element. In this way, the policy control network element determines the recovery measure, so that the to-be-detected network element can process the fault that occurs by executing the recovery measure. In addition, the network fault analysis method provided in this embodiment of this application imposes no limitation on a format of the log data, and log data in a fixed format does not need to be inputted. The inputted log data may be structured data such as ALM, or may be unstructured log data such as log data generated by devices that are manufactured by different vendors. In this way, dependency on a format and source of log data during network fault analysis is reduced, and log processing efficiency is improved.

In a possible design, the fault detection network element is further configured to: receive the recovery measure sent by the policy control network element, and send the recovery measure to the to-be-detected network element. In the foregoing design, if the policy control network element does not directly communicate with the to-be-detected network element, but communicates with the to-be-detected network element through the fault detection network element, the policy control network element may send the recovery measure to the fault detection network element, and then the fault detection network element sends the recovery measure to the to-be-detected network element, to indicate the to-be-detected network element to process, by using the recovery measure, the fault that occurs.

In a possible design, if the policy control network element does not directly communicate with the to-be-detected network element, but communicates with the to-be-detected network element through the fault detection network element, the fault detection network element may directly request log data from the to-be-detected network element when obtaining the log data of the to-be-detected network element in the past specified duration, and then receive the log data sent by the to-be-detected network element. Alternatively, if the fault detection network element does not directly communicate with the to-be-detected network element, but communicates with the to-be-detected network element through the policy control network element, the fault detection network element may request log data from the policy control network element when obtaining the log data of the to-be-detected network element in the past specified duration, and then receive the log data sent by the policy control network element.

In a possible design, before the fault detection network element searches, in the fault relational database, for the fault type corresponding to the log feature, the fault detection network element may receive a fault analysis indication message sent by the policy control network element, where the fault analysis indication message carries at least one of the following information: a function identifier, a detection time, and a detection location, where the function identifier is used to identify a fault detection function, the detection time is used to indicate a time at which the fault detection network element performs fault detection on the to-be-detected network element, and the detection location is used to indicate a location at which the fault detection network element performs the fault detection on the to-be-detected network element. In the foregoing design, if the fault detection network element does not directly communicate with the to-be-detected network element, but communicates with the to-be-detected network element through the policy control network element, the fault detection network element may perform fault detection on the to-be-detected network element according to an indication of the policy control network element.

In a possible design, if the fault detection network element cannot find the fault type corresponding to the log feature in the fault relational database, the fault detection network element may output the determined log feature, receive the fault type corresponding to the outputted log feature, and input the determined log feature and the received fault type to the fault relational database through learning. In the foregoing design, the fault relational database can improve accuracy of fault detection by continuously learning new fault types and log features.

In a possible design, the fault detection network element may further receive an update indication message sent by the policy control network element, and update the fault relational database, where the update indication message is used to indicate the fault detection network element to update the fault relational database. In the foregoing design, the update indication message may indicate an update operation, for example, updating the fault relational database or extracting a new fault type. The update indication message may further indicate an update requirement, for example, a decision criterion used when a new fault is extracted or a parameter used when the fault relational database is updated. The fault detection network element may update the fault relational database according to the indication of the policy control network element.

In a possible design, after establishing a connection to the policy control network element, the fault detection network element may receive fault knowledge sent by the policy control network element. The fault knowledge may include recorded historical log data, a log feature corresponding to each piece of log data, and a fault type corresponding to each piece of log data. In the foregoing design, the fault detection network element may be initialized based on the fault knowledge sent by the policy control network element, so that the fault detection network element can obtain a relatively accurate detection result during initial detection.

In a possible design, if the fault detection network element determines that a network fault occurs in the fault detection network element, and consequently cannot report a fault type to the policy control network element, the fault detection network element may broadcast the fault type of the fault detection network element, so that a terminal device, after receiving the fault type broadcast by the fault detection network element in which the network fault occurs, records the fault type and reports the fault type to a fault detection network element that works properly, to enable the fault detection network element that works properly to send the fault type reported by the terminal device to the policy control network element. In this way, the policy control network element determines a recovery measure corresponding to the fault type, and indicates the fault detection network element in which the network fault occurs to process, by using the recovery measure, the network fault that occurs.

In a possible design, if the fault detection network element determines that a network fault occurs in the fault detection network element, and consequently cannot report a fault type to the policy control network element, the fault detection network element may broadcast the fault type of the fault detection network element, so that a fault detection network element that works properly, after receiving the fault type broadcast by the fault detection network element in which the network fault occurs, reports the fault type to the policy control network element. In this way, the policy control network element determines a recovery measure corresponding to the fault type, and indicates the fault detection network element in which the network fault occurs to process, by using the recovery measure, the network fault that occurs.

According to a second aspect, this application provides a network fault detection method. The method includes the following steps: A policy control network element receives a fault type sent by a fault detection network element, where the fault type is determined by the fault detection network element based on log data of a to-be-detected network element in past specified duration when the to-be-detected network element is faulty. The policy control network element determines a corresponding recovery measure based on the received fault type, and sends the recovery measure to the to-be-detected network element, to indicate the to-be-detected network element to process, by using the recovery measure, a fault that occurs. In this embodiment of this application, a fault detection function may be implemented in a 5G network, and a network fault analysis architecture including the policy control network element and the fault detection network element is provided. Based on the architecture, the policy control network element may determine the recovery measure based on the fault type sent by the fault detection network element, so that the to-be-detected network element can process the fault that occurs by executing the recovery measure.

In a possible design, when the policy control network element sends the recovery measure to the to-be-detected network element, if the fault detection network element does not directly communicate with the to-be-detected network element, but communicates with the to-be-detected network element through the policy control network element, the policy control network element may directly send the recovery measure to the to-be-detected network element. Alternatively, when the policy control network element sends the recovery measure to the to-be-detected network element, if the policy control network element does not directly communicate with the to-be-detected network element, but communicates with the to-be-detected network element through the fault detection network element, the policy control network element may send the recovery measure to the to-be-detected network element through the fault detection network element.

In a possible design, when the fault detection network element does not directly communicate with the to-be-detected network element, but communicates with the to-be-detected network element through the policy control network element, the policy control network element, before receiving the fault type sent by the fault detection network element, may further receive a log data request sent by the fault detection network element, and send the log data of the to-be-detected network element to the fault detection network element, so that the fault detection network element obtains the log data of the to-be-detected network element, where the log data request is used to request the log data that is pre-recorded by the to-be-detected network element in the past specified duration.

In a possible design, if the fault detection network element does not directly communicate with the to-be-detected network element, but communicates with the to-be-detected network element through the policy control network element, the policy control network element, before receiving the fault type sent by the fault detection network element, may further send a fault analysis indication message to the fault detection network element, where the fault analysis indication message carries at least one of the following information: a function identifier, a detection time, and a detection location, where the function identifier is used to identify a fault detection function, the detection time is used to indicate a time at which the fault detection network element performs fault detection on the to-be-detected network element, and the detection location is used to indicate a location at which the fault detection network element performs the fault detection on the to-be-detected network element. In the foregoing design, if the fault detection network element does not directly communicate with the to-be-detected network element, but communicates with the to-be-detected network element through the policy control network element, the fault detection network element may perform fault detection on the to-be-detected network element according to an indication of the policy control network element.

In a possible design, the policy control network element may further send an update indication message to the fault detection network element, where the update indication message is used to indicate the fault detection network element to update a fault relational database. In the foregoing design, the update indication message may indicate an update operation, for example, updating the fault relational database or extracting a new fault type. The update indication message may further indicate an update requirement, for example, a decision criterion used when a new fault is extracted or a parameter used when update is performed. The policy control network element may indicate, by sending the update indication message, the fault detection network element to update the fault relational database.

In a possible design, after establishing a connection to the fault detection network element, the policy control network element may send fault knowledge to the fault detection network element. The fault knowledge includes recorded historical log data, a log feature corresponding to each piece of log data, and a fault type corresponding to each piece of log data. In the foregoing design, the fault detection network element may be initialized based on the fault knowledge sent by the policy control network element, so that the fault detection network element can obtain a relatively accurate detection result during initial detection.

According to a third aspect, this application provides a network fault prediction method. The method includes the following steps: A fault prediction network element obtains first log data of a to-be-detected network element in past specified duration. The fault prediction network element predicts, based on the obtained first log data, second log data of the to-be-detected network element obtained after preset duration. The fault prediction network element determines a corresponding log feature based on the predicted second log data, and searches, in a fault relational database, for a fault type corresponding to the log feature, where the fault relational database includes association relationships between different fault types and log features. After obtaining the predicted fault type, the fault prediction network element sends the fault type to a policy control network element, so that the policy control network element can determine a corresponding preventive measure based on the fault type. In this way, the to-be-detected network element may perform processing by using the preventive measure, to avoid a fault that may occur after the preset duration. In this embodiment of this application, a fault prediction function may be implemented in a 5G network, and a network fault analysis architecture including the policy control network element and the fault prediction network element is provided. Based on the architecture, the fault prediction network element may predict, based on obtained log data in a past period of time, log data in a future period of time, then, determine a fault type based on the predicted log data, and send the predicted fault type to the policy control network element. In this way, the policy control network element determines a recovery measure, so that the to-be-detected network element can perform processing by executing the recovery measure, to avoid the fault that may occur after the preset duration.

In a possible design, the fault prediction network element is further configured to: receive a prediction measure sent by the policy control network element, and send the preventive measure to the to-be-detected network element. In the foregoing design, if the policy control network element does not directly communicate with the to-be-detected network element, but communicates with the to-be-detected network element through the fault prediction network element, the policy control network element may send the recovery measure to the fault prediction network element, and then the fault prediction network element sends the recovery measure to the to-be-detected network element, to indicate the to-be-detected network element to process, by using the recovery measure, the fault that occurs.

In a possible design, if the policy control network element does not directly communicate with the to-be-detected network element, but communicates with the to-be-detected network element through the fault prediction network element, the fault prediction network element may directly request first log data from the to-be-detected network element when obtaining the first log data that is pre-recorded by the to-be-detected network element in the past specified duration, and then receive the first log data sent by the to-be-detected network element. Alternatively, if the fault prediction network element does not directly communicate with the to-be-detected network element, but communicates with the to-be-detected network element through the policy control network element, the fault prediction network element may request first log data from the policy control network element when obtaining the first log data that is pre-recorded by the to-be-detected network element in the past specified duration, and then receive the first log data sent by the policy control network element.

In a possible design, before the fault prediction network element predicts, based on the first log data, the second log data of the to-be-detected network element obtained after the preset duration, the fault prediction network element may further receive a fault analysis indication message sent by the policy control network element, where the fault analysis indication message carries the preset duration, or the fault analysis indication message carries the preset duration and at least one of the following information: a function identifier, a prediction time, and a prediction location, where the function identifier is used to identify a fault prediction function, the prediction time is used to indicate a time at which the fault prediction network element performs fault prediction on the to-be-detected network element, and the prediction location is used to indicate a location at which the fault prediction network element performs the fault prediction on the to-be-detected network element. In the foregoing design, if the fault prediction network element does not directly communicate with the to-be-detected network element, but communicates with the to-be-detected network element through the policy control network element, the fault prediction network element may perform fault prediction on the to-be-detected network element according to an indication of the policy control network element.

In a possible design, if the fault prediction network element cannot find the fault type corresponding to the log feature in the fault relational database, the fault detection network element may output the determined log feature, receive the fault type corresponding to the outputted log feature, and input the determined log feature and the received fault type to the fault relational database through learning. In the foregoing design, the fault relational database can improve accuracy of fault prediction by continuously learning new fault types and log features.

In a possible design, the fault prediction network element may further receive an update indication message sent by the policy control network element, where the update indication message is used to indicate the fault prediction network element to update the fault relational database; and update the fault relational database. In the foregoing design, the update indication message may indicate an update operation, for example, updating the fault relational database or extracting a new fault type. The update indication message may further indicate an update requirement, for example, a decision criterion used when a new fault is extracted or a parameter used when the fault relational database is updated. The fault prediction network element may update the fault relational database according to the indication of the policy control network element.

In a possible design, after establishing a connection to the policy control network element, the fault prediction network element may receive fault knowledge sent by the policy control network element. The fault knowledge includes recorded historical log data, a log feature corresponding to each piece of log data, and a fault type corresponding to each piece of log data. In the foregoing design, the fault prediction network element may be initialized based on the fault knowledge sent by the policy control network element, so that the fault prediction network element can obtain a relatively accurate prediction result during initial prediction.

In a possible design, if the fault detection network element determines that a network fault occurs in the fault detection network element, and consequently cannot report a fault type to the policy control network element, the fault detection network element may broadcast the fault type of the fault detection network element, so that a terminal device, after receiving the fault type broadcast by the fault detection network element in which the network fault occurs, records the fault type and reports the fault type to a fault detection network element that works properly, to enable the fault detection network element that works properly to send the fault type reported by the terminal device to the policy control network element. In this way, the policy control network element determines a recovery measure corresponding to the fault type, and indicates the fault detection network element in which the network fault occurs to process, by using the recovery measure, the network fault that occurs.

In a possible design, if the fault detection network element determines that a network fault occurs in the fault detection network element, and consequently cannot report a fault type to the policy control network element, the fault detection network element may broadcast the fault type of the fault detection network element, so that a fault detection network element that works properly, after receiving the fault type broadcast by the fault detection network element in which the network fault occurs, reports the fault type to the policy control network element. In this way, the policy control network element determines a recovery measure corresponding to the fault type, and indicates the fault detection network element in which the network fault occurs to process, by using the recovery measure, the network fault that occurs.

According to a fourth aspect, this application provides a network fault prediction method. The method includes the following steps: A policy control network element receives a fault type sent by a fault prediction network element, where the fault type is determined by the fault prediction network element based on log data of a to-be-detected network element in past specified duration. The policy control network element determines a corresponding preventive measure based on the received fault type, and sends the preventive measure to the to-be-detected network element, to indicate the to-be-detected network element to perform processing by using the preventive measure, to avoid a fault that may occur after preset duration. In this embodiment of this application, a fault prediction function may be implemented in a 5G network, and a network fault analysis architecture including the policy control network element and the fault prediction network element is provided. Based on the architecture, the policy control network element may determine the preventive measure based on the fault type sent by the fault prediction network element, so that the to-be-detected network element can perform processing by using the recovery measure, to avoid the fault that may occur after the preset duration.

In a possible design, when the policy control network element sends the preventive measure to the to-be-detected network element, if the fault prediction network element does not directly communicate with the to-be-detected network element, but communicates with the to-be-detected network element through the policy control network element, the policy control network element may directly send the preventive measure to the to-be-detected network element. Alternatively, when the policy control network element sends the recovery measure to the to-be-detected network element, if the policy control network element does not directly communicate with the to-be-detected network element, but communicates with the to-be-detected network element through the fault prediction network element, the policy control network element may send the recovery measure to the to-be-detected network element through the fault prediction network element.

In a possible design, when the fault prediction network element does not directly communicate with the to-be-detected network element, but communicates with the to-be-detected network element through the policy control network element, the policy control network element, before receiving the fault type sent by the fault prediction network element, may further receive a log data request sent by the fault prediction network element, where the log data request is used to request the log data that is pre-recorded by the to-be-detected network element in the past specified duration, and send the log data of the to-be-detected network element to the fault prediction network element, so that the fault prediction network element obtains the log data of the to-be-detected network element.

In a possible design, if the fault prediction network element does not directly communicate with the to-be-detected network element, but communicates with the to-be-detected network element through the policy control network element, the policy control network element, before receiving the fault type sent by the fault prediction network element, may further send a fault analysis indication message to the fault prediction network element, where the fault analysis indication message carries the preset duration, or the fault analysis indication message carries the preset duration and at least one of the following information: a function identifier, a prediction time, and a prediction location, where the function identifier is used to identify a fault prediction function, the prediction time is used to indicate a time at which the fault prediction network element performs fault prediction on the to-be-detected network element, and the prediction location is used to indicate a location at which the fault prediction network element performs the fault prediction on the to-be-detected network element. In the foregoing design, if the fault prediction network element does not directly communicate with the to-be-detected network element, but communicates with the to-be-detected network element through the policy control network element, the fault prediction network element may perform fault prediction on the to-be-detected network element according to an indication of the policy control network element.

In a possible design, the policy control network element may further send an update indication message to the fault prediction network element, where the update indication message is used to indicate the fault prediction network element to update a fault relational database. In the foregoing design, the update indication message may indicate an update operation, for example, updating the fault relational database or extracting a new fault type. The update indication message may further indicate an update requirement, for example, a decision criterion used when a new fault is extracted or a parameter used when update is performed. The policy control network element may indicate, by sending the update indication message, the fault prediction network element to update the fault relational database.

In a possible design, after establishing a connection to the fault prediction network element, the policy control network element may send fault knowledge to the fault prediction network element. The fault knowledge includes recorded historical log data, a log feature corresponding to each piece of log data, and a fault type corresponding to each piece of log data. In the foregoing design, the fault prediction network element may be initialized based on the fault knowledge sent by the policy control network element, so that the fault prediction network element can obtain a relatively accurate prediction result during initial prediction.

According to a fifth aspect, this application provides a fault detection network element. The fault detection network element includes: a first communications interface, configured to send and receive a message between the fault detection network element and a policy control network element; a memory, configured to store a computer program; and a processing module, configured to invoke the computer program stored in the memory, to perform the following steps: receiving, through the first communications interface or a second communications interface, log data that is pre-recorded by a to-be-detected network element in past specified duration, where the second communications interface is configured to send and receive a message between the fault detection network element and the to-be-detected network element; determining a corresponding log feature based on the obtained log data, and searching, in a fault relational database, for a fault type corresponding to the log feature, where the fault relational database includes association relationships between different fault types and log features; and when the fault type corresponding to the log feature is found, sending the fault type to the policy control network element through the first communications interface, so that the policy control network element determines a corresponding recovery measure based on the fault type, and indicates the to-be-detected network element to process, by using the recovery measure, a fault that occurs. The fault relational database may be stored in the memory included in the fault detection network element, or may be stored in another storage area, for example, a cloud storage space.

In a possible design, when the processing module is configured to obtain the log data that is pre-recorded by the to-be-detected network element in the past specified duration, the processing module may be specifically configured to: send a log data request to the to-be-detected network element through the second communications interface, and receive, through the second communications interface, the log data sent by the to-be-detected network element, where the log data request is used to request the log data; or send a log data request to the policy control network element through the first communications interface, and receive, through the first communications interface, the log data sent by the policy control network element.

In a possible design, the processing module may be further configured to: before searching, in the fault relational database, for the fault type corresponding to the log feature, receive, through the first communications interface, a fault analysis indication message sent by the policy control network element, where the fault analysis indication message carries at least one of the following information: a function identifier, a detection time, and a detection location, where the function identifier is used to identify a fault detection function, the detection time is used to indicate a time at which the fault detection network element performs fault detection on the to-be-detected network element, and the detection location is used to indicate a location at which the fault detection network element performs the fault detection on the to-be-detected network element.

In a possible design, the fault detection network element may further include an input/output module. The processing module is further configured to: output the determined log feature through the input/output module when the fault type corresponding to the log feature cannot be found in the fault relational database; receive a corresponding fault type that is inputted from the input/output module and that is determined based on the output log feature; and learn the log feature outputted by the input/output module and the corresponding fault type received from the input/output module to the fault relational database.

In a possible design, the processing module may be further configured to: receive, through the first communications interface, an update indication message sent by the policy control network element, where the update indication message is used to indicate to update the fault relational database; and update the fault relational database based on the update indication message.

According to a sixth aspect, this application provides a policy control network element. The policy control network element includes: a first communications interface, configured to send and receive a message between the policy control network element and a fault detection network element; a memory, configured to store a computer program; and a processing module, configured to invoke the computer program stored in the memory, to perform the following steps: receiving, through the first communications interface, a fault type sent by a fault detection network element, where the fault type is determined by the fault detection network element based on log data of a to-be-detected network element in past specified duration when the to-be-detected network element is faulty; determining a corresponding recovery measure based on the fault type received through the first communications interface; and sending the recovery measure to the to-be-detected network element through the first communications interface or a second communications interface, to indicate the to-be-detected network element to process, by using the recovery measure, a fault that occurs, where the second communications interface is used to send and receive a message between the fault detection network element and the to-be-detected network element.

In a possible design, the first communications interface may be further configured to: before receiving the fault type sent by the fault detection network element, receive a log data request sent by the fault detection network element, where the log data request is used to request the log data of the to-be-detected network element in the past specified duration; and send the log data of the to-be-detected network element to the fault detection network element.

In a possible design, the first communications interface may be further configured to: before receiving the fault type sent by the fault detection network element, send a fault analysis indication message to the fault detection network element, where the fault analysis indication message carries at least one of the following information: a function identifier, a detection time, and a detection location, where the function identifier is used to identify a fault detection function, the detection time is used to indicate a time at which the fault detection network element performs fault detection on the to-be-detected network element, and the detection location is used to indicate a location at which the fault detection network element performs the fault detection on the to-be-detected network element.

In a possible design, the first communications interface is further configured to: send an update indication message to the fault detection network element, where the update indication message is used to indicate the fault detection network element to update the fault relational database.

According to a seventh aspect, this application provides a fault prediction network element. The fault prediction network element includes: a first communications interface, configured to send and receive a message between the fault prediction network element and a policy control network element; a memory, configured to store a computer program; and a processing module, configured to invoke the computer program stored in the memory, to perform the following steps: receiving, through the first communications interface or a second communications interface, first log data that is pre-recorded by a to-be-detected network element in past specified duration, where the second communications interface is configured to send and receive a message between the fault detection network element and the to-be-detected network element; predicting, based on the first log data, second log data of the to-be-detected network element obtained after preset duration; determining a corresponding log feature based on the second log data, and searching, in a fault relational database, for a fault type corresponding to the log feature, where the fault relational database includes association relationships between different fault types and log features; and sending the fault type to the policy control network element through the first communications interface, so that the policy control network element determines a corresponding preventive measure based on the fault type, and indicates the to-be-detected network element to perform processing by using the preventive measure, to avoid a fault that may occur after the preset duration. The fault relational database may be stored in the memory included in the fault detection network element, or may be stored in another storage area, for example, a cloud storage space.

In a possible design, when the processing module is configured to obtain the log data that is pre-recorded by the to-be-detected network element in the past specified duration, the processing module may be specifically configured to: send a log data request to the to-be-detected network element through the second communications interface, and receive, through the second communications interface, the first log data sent by the to-be-detected network element, where the log data request is used to request the first log data; or send a log data request to the policy control network element through the first communications interface, and receive, through the first communications interface, the first log data sent by the policy control network element.

In a possible design, the processing module is further configured to: before predicting, based on the first log data, the second log data of the to-be-detected network element obtained after preset duration, receive, through the first communications interface, a fault analysis indication message sent by the policy control network element, where the fault analysis indication message carries the preset duration, or the fault analysis indication message carries the preset duration and at least one of the following information: a function identifier, a prediction time, and a prediction location, where the function identifier is used to identify a fault prediction function, the prediction time is used to indicate a time at which the fault prediction network element performs fault prediction on the to-be-detected network element, and the prediction location is used to indicate a location at which the fault prediction network element performs the fault prediction on the to-be-detected network element.

In a possible design, the fault prediction network element may further include an input/output module. The processing module is further configured to: output the determined log feature through the input/output module when the fault type corresponding to the log feature cannot be found in the fault relational database; receive a corresponding fault type that is inputted from the input/output module and that is determined based on the output log feature; and input the log feature outputted by the input/output module and the corresponding fault type received from the input/output module to the fault relational database through learning.

In a possible design, the processing module is further configured to: receive, through the first communications interface, an update indication message sent by the policy control network element, where the update indication message is used to indicate to update the fault relational database; and update the fault relational database based on the update indication message.

According to an eighth aspect, this application provides a policy control network element. The policy control network element includes: a first communications interface, configured to send and receive a message between the policy control network element and a fault prediction network element; a memory, configured to store a computer program; and a processing module, configured to invoke the computer program stored in the memory, to perform the following steps: receiving, through the first communications interface, a fault type sent by a fault prediction network element, where the fault type is determined by the fault prediction network element based on log data of a to-be-detected network element in past specified duration; determining a corresponding preventive measure based on the fault type received through the first communications interface; and sending the recovery measure to the to-be-detected network element through the first communications interface or a second communications interface, to indicate the to-be-detected network element to process, by using the recovery measure, a fault that occurs, where the second communications interface is used to send and receive a message between the fault prediction network element and the to-be-detected network element.

In a possible design, the first communications interface may be further configured to: before receiving the fault type sent by the fault prediction network element, receive a log data request sent by the fault prediction network element, where the log data request is used to request the first log data of the to-be-detected network element in the past specified duration; and send the first log data of the to-be-detected network element to the fault prediction network element.

In a possible design, the first communications interface may be further configured to: before receiving the fault type sent by the fault prediction network element, send a fault analysis indication message to the fault prediction network element, where the fault analysis indication message carries the preset duration, or the fault analysis indication message carries the preset duration and at least one of the following information: a function identifier, a prediction time, and a prediction location, where the function identifier is used to identify a fault prediction function, the prediction time is used to indicate a time at which the fault prediction network element performs fault prediction on the to-be-detected network element, and the prediction location is used to indicate a location at which the fault prediction network element performs the fault prediction on the to-be-detected network element.

In a possible design, the first communications interface may be further configured to: send an update indication message to the fault prediction network element, where the update indication message is used to indicate the fault prediction network element to update the fault relational database.

According to a ninth aspect, this application further provides a computer-readable storage medium. The computer-readable storage medium is configured to store a computer software instruction used to perform a function according to any one of the first aspect to the fourth aspect or the designs of any one of the first aspect to the fourth aspect. The computer software instruction includes a program designed for performing the method according to any one of the first aspect to the fourth aspect or the designs of any one of the first aspect to the fourth aspect.

According to a tenth aspect, an embodiment of this application provides a computer program product including an instruction. When the computer program product runs on a computer, the computer is enabled to perform the method according to any one of the first aspect to the fourth aspect or the designs of any one of the first aspect to the fourth aspect.

The network fault prediction methods provided in the third aspect and the fourth aspect in the embodiments of this application may be separately used as an independent solution, or may be further used based on the network fault detection methods provided in the first aspect and the second aspect in the embodiments of this application.

It should be understood that, technical solutions in the fifth aspect to the eighth aspect of the embodiments of this application are respectively consistent with those in the first aspect to the fourth aspect of the embodiments of this application, and beneficial effects achieved by these aspects and corresponding implementable design manners are similar. Details are not described again.

### BRIEF DESCRIPTION OF DRAWINGS

FIG. 1 is a schematic diagram of an architecture of a 5G communications system according to this application;
FIG. 2 is a schematic structural diagram of a network fault analysis system according to this application;
FIG. 3 is a schematic flowchart of a network fault detection method according to this application;
FIG. 4 is a schematic flowchart of updating a fault relational database according to this application;
FIG. 5 is a schematic diagram of a communication mode according to this application;
FIG. 6 is a schematic flowchart of a network fault detection method according to this application;
FIG. 7 is a schematic diagram of an initialization process of a fault detection network element according to this application;
FIG. 8 is a schematic diagram of another communication mode according to this application;
FIG. 9 is a schematic flowchart of another network fault detection method according to this application;
FIG. 10 is a schematic flowchart of processing, by a fault detection network element, a fault of the fault detection network element according to this application;
FIG. 11 is another schematic flowchart of processing, by a fault detection network element, a fault of the fault detection network element according to this application;
FIG. 12 is a schematic flowchart of a network fault prediction method according to this application;
FIG. 13 is a schematic diagram of a communication mode according to this application;
FIG. 14 is a schematic flowchart of a network fault prediction method according to this application;
FIG. 15 is a schematic diagram of another communication mode according to this application;
FIG. 16 is a schematic flowchart of another network fault prediction method according to this application;
FIG. 17 is a schematic structural diagram of a fault detection network element according to this application;
FIG. 18 is a schematic structural diagram of a fault prediction network element according to this application;
FIG. 19 is a schematic structural diagram of a policy control network element according to this application;
FIG. 20 is a schematic structural diagram of a network fault analysis network element according to this application; and
FIG. 21 is a schematic structural diagram of a policy control network element according to this application.

### DESCRIPTION OF EMBODIMENTS

To make the objectives, technical solutions, and advantages of this application clearer, the following further describes this application in detail with reference to the accompanying drawings.

As networks evolve, a trend of network management also changes accordingly, developing toward a direction of being comprehensive, distributed, and intelligent. Through various network functions, the networks can implement network resource planning, construction, and optimization through network analysis. A concept function of a network function (Network Function, NF) service is explicitly proposed in a 5G standard. To be specific, a conventional network element is converted into an NF, and then the NF is decomposed into a plurality of NF services. The NF services communicate with each other through a communications interface. Each NF service is deployed, upgraded, and scaled independently from another NF service.

An architecture of a 5G communications system is a service based architecture (service based architecture, SBA). The architecture of a 5G communications system may include but is not limited to a network exposure function network element, a policy control function network element, a data management network element, an application function network element, a core network access and mobility management function network element, a session management function network element, a user plane function network element, and the like. The function network elements are described as follows:

The session management function network element may be configured to be responsible for session management (including session establishment, modification, and release) of a terminal device, selection and reselection of the user plane function network element, internet protocol (internet protocol, IP) address assignment of the terminal device, quality of service (quality of service, QoS) control, and the like.

The policy control function network element may be configured to be responsible for policy control decision-making, and providing functions such as detection that is based on a service data flow and an application, gating control, QoS, and flow-based charging control. For example, in 5G, the policy control function network element may be a PCF (policy control function) network element. In future communications such as 6G, the policy control function network element may still be a PCF network element or have another name. This is not limited in this application. When the policy control function network element is a PCF network element, the PCF network element may provide an Npcf service.

A main function of the application function network element is to communicate with a 3rd generation partnership project (the 3rd generation partnership project, 3GPP) core network to provide a service, to affect service flow routing, access network capability exposure, policy control, and the like. For example, in 5G, the application function network element may be an AF (application function) network element.

The data management network element may be configured to manage subscription data of the terminal device, registration information related to the terminal device, and the like.

The network exposure function network element may be configured to enable the 3GPP to securely provide a network service capability to a third-party server.

The core network access and mobility management function network element may be configured to manage access control and mobility of the terminal device.

The user plane function network element mainly provides service processing functions of a user plane, including service routing, packet forwarding, anchoring, QoS mapping and execution, identification of an uplink identifier and routing of a packet to a data network, triggering of a notification of downlink packet buffering and downlink data arrival, connection with an external data network, and the like.

Each of the foregoing network elements may also be referred to as a function entity, and may be a network element implemented on dedicated hardware, or may be a software instance run on dedicated hardware, or an instance of a virtualization function on a proper platform. For example, the virtualization platform may be a cloud platform.

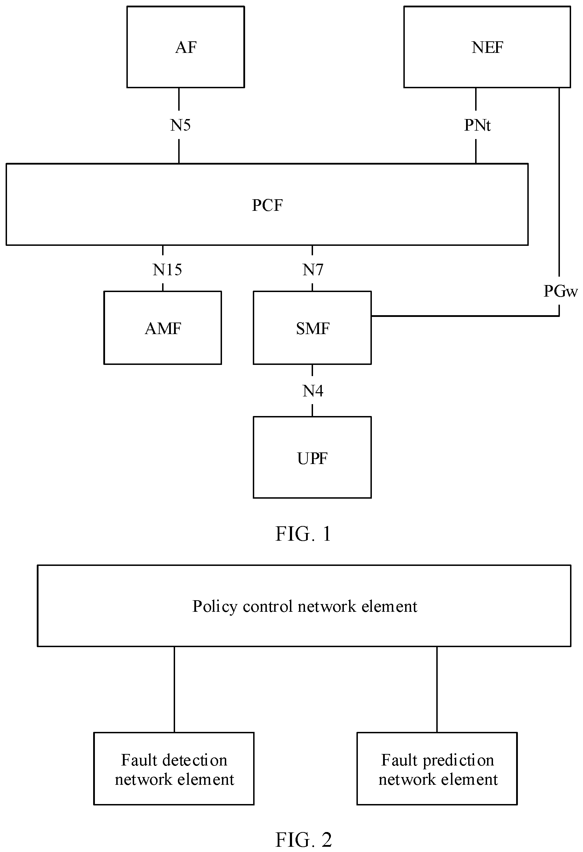

FIG. 1 shows a possible example of an architecture of the 5G communications system. The architecture of the 5G communications system specifically includes an application function (application function, AF), a network exposure function (network exposure function, NEF), a policy control function (Policy Control function, PCF), a core access and mobility management function (Core Access and Mobility Management Function, AMF), a session management function (session management function, SMF), and a user plane function (user plane function, UPF). The AF may be connected to the PCF through an N5 interface, the AMF may be connected to the PCF through an N15 interface, the SMF may be connected to the PCF through an N7 interface, the SMF may be connected to the UPF through an N4 interface, and the SMF may be connected to the NEF through a PGw interface. An interface name is merely an example for description, and is not specifically limited in the embodiments of this application. It should be understood that names of the network elements shown in FIG. 1 are merely used as examples for description herein, and are not used as limitations on the network elements included in the architecture of the communications system to which the method in this application is applicable. The architecture of the communications system shown in FIG. 1 is not limited to including only the network elements shown in the figure, and may further include another device not shown in the figure. Details are not described herein in this application one by one. A distribution form of the network elements in the 5G communications system is not limited in the embodiments of this application. The distribution form shown in FIG. 1 is merely an example, and is not limited in this application.

An embodiment of this application provides a network fault analysis system based on an architecture of a 5G communications system. The system includes a policy control network element, and may further include a fault detection network element and/or a fault prediction network element. The fault detection network element is connected to the policy control network element through a communications interface, and the fault prediction network element is connected to the policy control network element through a communications interface, as shown in FIG. 2.

The fault detection network element may be configured to detect a fault on a network element device. In a 5G system or a future communications system, a function network element that detects a fault on a network element device may have another name, for example, AA. It should be understood that if AA can also implement a function implemented by the fault detection network element in this embodiment of this application, AA may also be understood as the fault detection network element in this embodiment of this application.

The fault prediction network element may be configured to predict a fault on a network element device. In a 5G system or a future communications system, a function network element that predicts a fault on a network element device may have another name, for example, BB. It should be understood that if BB can also implement a function implemented by the fault prediction network element in this embodiment of this application, BB may also be understood as the fault prediction network element in this embodiment of this application.

The policy control network element is configured to determine a recovery measure based on a fault type detected by the fault detection network element, so that the network element device processes, by using the recovery measure, a fault that occurs; and/or the policy control network element is configured to determine a preventive measure based on a fault type predicted by the fault prediction network element, so that the network element device can prevent, by using the preventive measure, a fault that may occur in the future.

It should be noted that the network fault analysis system shown in FIG. 2 may further include all or a portion of network elements in the 5G system shown in FIG. 1, or may include another network element not shown in FIG. 1. Details are not described herein in this application one by one.

It should be noted that a distribution form of the network elements in the network fault analysis system is not limited in this embodiment of this application. The distribution form shown in FIG. 2 is merely an example, and is not limited in this application.

For ease of description, the network elements shown in FIG. 2 are used as examples for description below in this application. It should be understood that names of all network elements in this application are merely examples, and may also be referred to as other names in future communication, or the network elements in this application may be replaced with other entities, devices, or the like with a same function in future communication. This is not limited in this application. A unified description is provided herein, and details are not described below.

It should be noted that the network fault analysis system shown in FIG. 2 does not constitute a limitation on a communications system to which the embodiments of this application are applicable. The communications system shown in FIG. 2 is based on an architecture of a 5G system. Optionally, the method in this embodiment of this application is further applicable to various future communications systems.

In this application, "a plurality of' refers to two or more than two.

In addition, it should be understood that in descriptions of this application, terms such as "first" and "second" are merely used for differentiation and description, but should not be understood as an indication or implication of relative importance or an indication or implication of an order.

The following specifically describes the solutions provided in the embodiments of this application with reference to the accompanying drawings.

The embodiments of this application provide a network fault detection method and a network fault prediction method based on the network fault analysis system shown in FIG. 2. The network fault detection method and the network fault prediction method may be separately used as an independent solution, or may be used in combination. For example, the network fault prediction method is further used based on the network fault detection method, or the network fault detection method is further used based on the network fault prediction method.

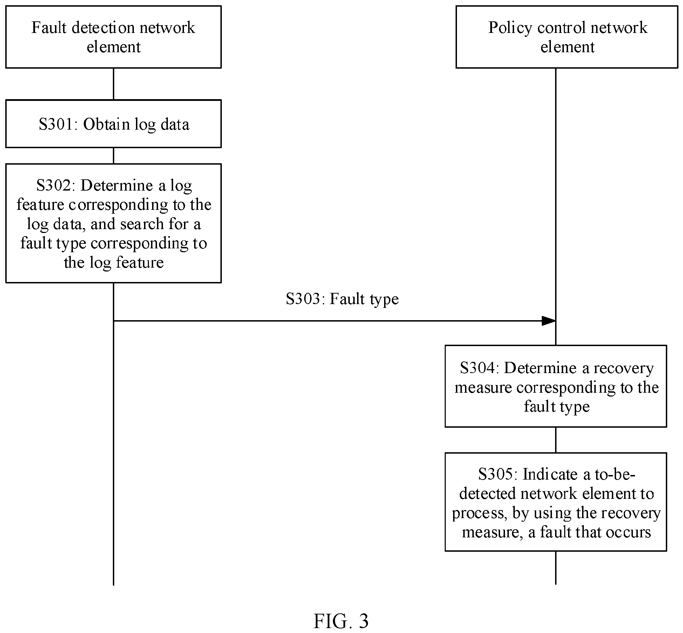

An embodiment of this application provides a network fault analysis method. Referring to FIG. 3, a specific procedure of the network fault detection method includes the following steps:

S301: Afault detection network element obtains log data that is pre-recorded by a to-be-detected network element in past specified duration.

S302: The fault detection network element determines a corresponding log feature based on the obtained log data, and searches, in a fault relational database, for a fault type corresponding to the log feature, where the fault relational database includes association relationships between different fault types and log features.

In a possible implementation, the fault detection network element may input the obtained log data into a pre-trained neural network model, to obtain the fault type corresponding to the log data. The neural network model may be used to extract the log feature corresponding to the log data, and search, in the fault relational database, for the fault type corresponding to the log feature.

S303. When finding the fault type corresponding to the log feature, the fault detection network element sends the found fault type to a policy control network element.

For example, the fault detection network element may send a fault analysis result information element to the policy control network element, and the fault analysis result information element may include but is not limited to a function identifier, an analysis time, an analysis location, a fault status, specific fault information, and the like. The function identifier is used to identify a fault detection function, and the detection time is used to indicate a time at which the fault detection network element performs fault detection on the to-be-detected network element. The detection location is used to indicate a location at which the fault detection network element performs fault detection on the to-be-detected network element. The fault status is used to identify whether a fault occurs in the to-be-detected network element. The specific fault information includes a fault type that occurs in the to-be-detected network element, and/or whether the fault type being a known fault type, and/or whether the fault type being a software fault or a hardware fault, and so on. The fault analysis result information element may alternatively include a recommended recovery measure and the like.

It should be understood that names of all information elements and signaling in this application are merely examples, and may also be referred to as other names in future communication. Alternatively, information elements and signaling in this application in future communication may be replaced with other information, messages, information elements, signaling, or the like with a same function. This is not limited in this application. A unified description is provided herein, and details are not described below.

S304: The policy control network element determines a corresponding recovery measure based on the received fault type.

S305: The policy control network element indicates the to-be-detected network element to process, by using the recovery measure, the fault that occurs.

In this embodiment of this application, a network fault analysis architecture including the policy control network element and the fault detection network element is provided, and the network fault detection method is provided based on the architecture. Specifically, the fault detection network element may determine the fault type based on the obtained log data, and send the detected fault type to the policy control network element, the policy control network element may determine the recovery measure based on the received fault type, and the to-be-detected network element may process, by executing the recovery measure, the fault that occurs. According to the network fault detection method provided in this embodiment of this application, fault detection can be performed on the to-be-detected network element based on an NF service.

In this embodiment of this application, the log data obtained by the fault detection network element may be structured data such as ALM, or may be unstructured data such as log data generated by devices that are manufactured by different vendors. A structure of the log data is not limited herein in this embodiment of this application. Because the fault detection network element has no limitation on a format of the log data, the fault detection network element may perform fault detection on network element devices that are manufactured by different vendors, thereby improving universality of the network fault detection method.

In step S302, when the fault detection network element searches, in the fault relational database, for the fault type corresponding to the log feature, if the fault detection network element cannot find the fault type corresponding to the log feature in the fault relational database, the fault detection network element may further output the determined log feature, for example, output the determined log feature to a network management engineer for viewing, so that the network management engineer can manually analyze the corresponding fault type according to experience, and then enter the analyzed fault type to the fault detection network element. For example, the entering and outputting may be performed on a display interface, or through printing, or the entering may be performed through an input device such as a keyboard and the outputting may be performed through an output device such as a display. After receiving the fault type corresponding to the outputted log feature, the fault detection network element may further input the determined log feature and the received fault type to the fault relational database through learning, to continuously improve and update the fault relational database, and make an information amount of the fault relational database more comprehensive.

The fault detection network element may further update the fault relational database when receiving an update indication message sent by the policy control network element. In this embodiment of this application, the update indication message may be referred to as a fault knowledge update information element.

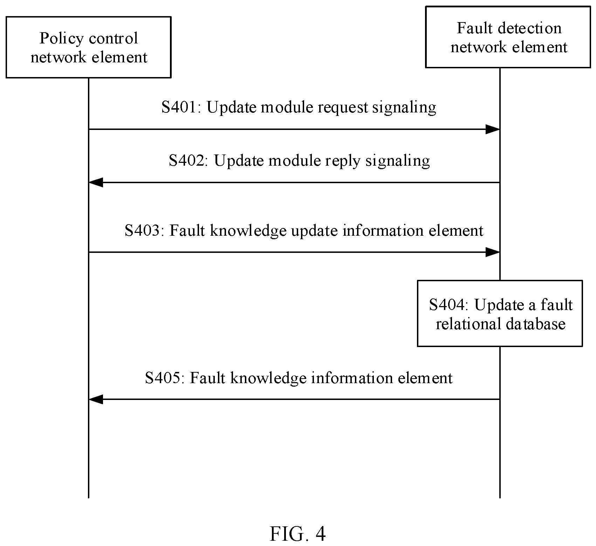

An update process of the fault relational database may be implemented by performing steps S401 to S405, as shown in FIG. 4.

S401: A policy control network element sends update module request signaling to a fault detection network element, where the update module request signaling is used to indicate the fault detection network element to update a fault relational database.

S402: The fault detection network element sends update module reply signaling to the policy control network element, where the update module reply signaling is used to notify the policy control network element of agreeing to update the fault relational database.

S403: The policy control network element sends a fault knowledge update information element to the fault detection network element. The fault knowledge update information element may carry an update operation identifier, an update requirement, and the like. The update operation identifier is used to identify the updated fault relational database that is used for fault detection, or used to identify extracting of a new fault type, or used to identify updating of a fault relational database used for fault prediction, or the like. The update requirement may be a decision criterion used when the new fault type is extracted, a parameter used when the fault relational database is updated, or the like.

S404: The fault detection network element updates the fault relational database based on the received fault knowledge update information element.

Certainly, the foregoing steps S401 and S402 may not be performed, and step S403 is directly performed.

After step S404 is performed, S405 may be further performed. The fault detection network element sends a fault knowledge information element to the policy control network element, and the fault knowledge information element carries log data accumulated by the fault detection network element, a log feature corresponding to each piece of log data, a fault type corresponding to each piece of log data, and a function identifier corresponding to each piece of log data. The function identifier is used to identify that the log data is obtained during fault detection, or is used to identify that the log data is obtained during fault prediction.

The fault relational database can improve accuracy of fault detection and scalability of the network fault detection method by continuously learning new fault types and log features. In this way, when a log data volume is relatively large, the fault relational database can maintain relatively good performance. When a quantity of fault types increases, the fault relational database can be easily scaled.

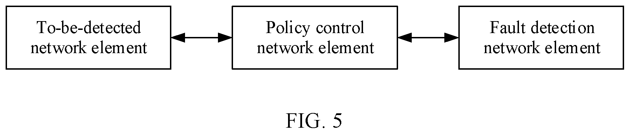

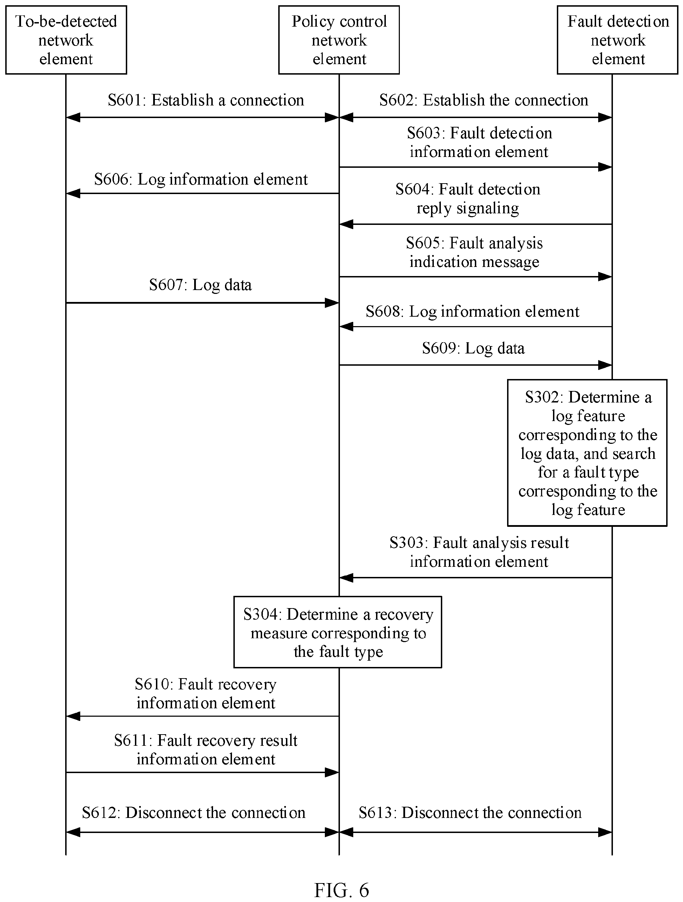

In a possible implementation, the fault detection network element does not directly communicate with the to-be-detected network element, but communicates with the to-be-detected network element through the policy control network element, as shown in FIG. 5. A specific procedure of the network fault detection method is described with reference to the communications architecture shown in FIG. 5, as shown in FIG. 6.

Before the fault detection network element performs the fault detection on the to-be-detected network element, step S601 and step S602 may be performed.

S601: A fault detection network element establishes a connection to a policy control network element. Specifically, the policy control network element may send status signaling to the fault detection network element, and the status signaling is used to query whether the fault detection network element is in idle state. When the fault detection network element is in idle state, the fault detection network element replies to the policy control network element that a current state is idle, and the fault detection network element establishes the connection to the policy control network element. When the fault detection network element is in busy state, the fault detection network element replies to the policy control network element that a current state is busy. When the fault detection network element replies that the current state is busy, the policy control network element sends the status signaling to the fault detection network element at an interval of first preset duration, until the fault detection network element replies that the current state is idle. The first preset duration may be 5s, 3s, 12s, or the like, or may be another time period. The first preset duration is not specifically limited herein in this embodiment of this application.

S602: The policy control network element establishes a connection to the to-be-detected network element. Specifically, the policy control network element may send the status signaling to the to-be-detected network element. When the to-be-detected network element is in idle state, the to-be-detected network element replies to the policy control network element that a current state is idle, and the to-be-detected network element establishes the connection to the policy control network element. When the to-be-detected network element is in busy state, the to-be-detected network element replies to the policy control network element that a current state is busy. When the to-be-detected network element replies that the current state is busy, the policy control network element sends the status signaling to the to-be-detected network element at an interval of second preset duration, until the to-be-detected network element replies that the current state is idle. The second preset duration may be 5s, 3s, 12s, or the like, or may be another time period. The second preset duration may be the same as the first preset duration, or the second preset duration may be different from the first preset duration. The second preset duration is not specifically limited herein in this embodiment of this application.

Step S601 and step S602 are not strictly performed in a specified sequence. Step S601 may be performed before step S602, or step S602 may be performed before step S601; or step S601 and step S602 may be performed at the same time. This is not specifically limited herein in this embodiment of this application.

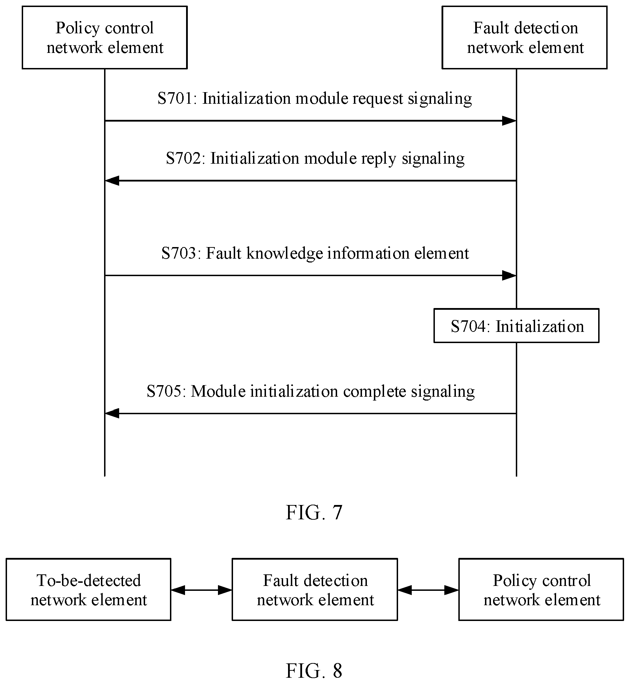

After the policy control network element establishes the connection to the fault detection network element, the fault detection network element may be initialized according to an indication of the policy control network element. An initialization process of the fault detection network element may be specifically implemented by performing steps S701 to S705, as shown in FIG. 7.

S701: A policy control network element sends initialization module request signaling to a fault detection network element, where the initialization module request signaling is used to request the fault detection network element to perform initialization.

S702: The fault detection network element sends initialization module reply signaling to the policy control network element, where the initialization module reply signaling is used to notify the policy control network element of agreeing to perform the initialization.

S703: The policy control network element sends a fault knowledge information element to the fault detection network element.

S704: The fault detection network element performs the initialization based on the received fault knowledge information element.

S705: The fault detection network element sends module initialization complete signaling to the policy control network element, where the module initialization complete signaling is used to notify the policy control network element that the fault detection network element completes the initialization.

Because the policy control network element may communicate with a plurality of fault detection network elements, fault knowledge sent by the policy control network element may include fault knowledge accumulated by the plurality of fault detection network elements. Therefore, the fault detection network element is initialized based on the fault knowledge sent by the policy control network element, and may perform fault detection on a to-be-detected network element based on fault knowledge accumulated by the plurality of fault detection network elements, thereby improving accuracy of performing the fault detection by the fault detection network element on the to-be-detected network element.

After establishing connections to the to-be-detected network element and the fault detection network element, the policy control network element may perform steps S603 to S605.

S603: The policy control network element sends fault detection signaling to the fault detection network element, where the fault detection signaling is used to indicate the fault detection network element to perform the fault detection on the to-be-detected network element.

S604: The fault detection network element sends fault detection reply signaling to the policy control network element, where the fault detection reply signaling is used to indicate the policy control network element to send a fault analysis information element.

S605: The policy control network element sends a fault analysis indication message to the fault detection network element, where in this embodiment of this application, the fault analysis indication message may be referred to as a fault analysis information element, and the fault analysis information element may carry at least one of the following information: a function identifier, a detection time, and a detection location.

Certainly, the foregoing steps S603 and S604 may not be performed, and after the policy control network element separately establishes the connections to the to-be-detected network element and the fault detection network element, S605 is directly performed.

In a possible implementation, step S301 in which the fault detection network element obtains the log data that is pre-recorded by the to-be-detected network element in the past specified duration when the to-be-detected network element is faulty may be specifically implemented by performing steps S606 to S609.

S606: The policy control network element sends a log data request to the to-be-detected network element, where in this embodiment of this application, the log data request may be referred to as a log information element, the log information element is used to request the log data that is pre-recorded by the to-be-detected network element in the past specified duration, and the log information element may carry a requirement of the policy control network element for the log data, for example, specified duration, a size of the log data, and a sending frequency of the log data.

S607: The to-be-detected network element sends the pre-recorded log data to the policy control network element based on the log information element.

S608: The fault detection network element sends the log information element to the policy control network element, where the log information element may carry a requirement of the fault detection network element for the log data, for example, specified duration, a size of the log data, and a sending frequency of the log data.

S609: The policy control network element sends, based on the received log information element, the log data sent by the to-be-detected network element to the fault detection network element.

For example, step S305 in which the policy control network element indicates the to-be-detected network element to process, by using the recovery measure, the fault that occurs may be specifically implemented by performing step S610.

S610: The policy control network element sends a fault recovery information element to the to-be-detected network element, where the fault recovery information element may carry a function identifier and a recovery measure identifier, where the function identifier is used to identify a fault detection function, and the recovery measure identifier is used to identify the recovery measure determined by the policy control network element.

After step S610 is performed, step S611 may be further performed. The to-be-detected network element sends a fault recovery result information element to the policy control network element, where the fault recovery result information element may carry the function identifier and the recovery result identifier. The function identifier is used to identify the fault detection function. When the to-be-detected network element successfully processes, by using the recovery measure determined by the policy control network element, the fault that occurs, the recovery result identifier is used to identify that recovery succeeds. When the to-be-detected network element fails to process, by using the recovery measure determined by the policy control network element, the fault that occurs, the recovery result identifier is used to identify that recovery fails.

After step S305 is performed, step S612 and step S613 may be performed.

S612: The policy control network element disconnects from the to-be-detected network element.

S613: The policy control network element disconnects from the fault detection network element.

Step S612 and step S613 are not strictly performed in a specified sequence. Step S612 may be performed before step S613, or step S613 may be performed before step S612; or step S612 and step S613 may be performed at the same time. This is not specifically limited herein in this embodiment of this application.

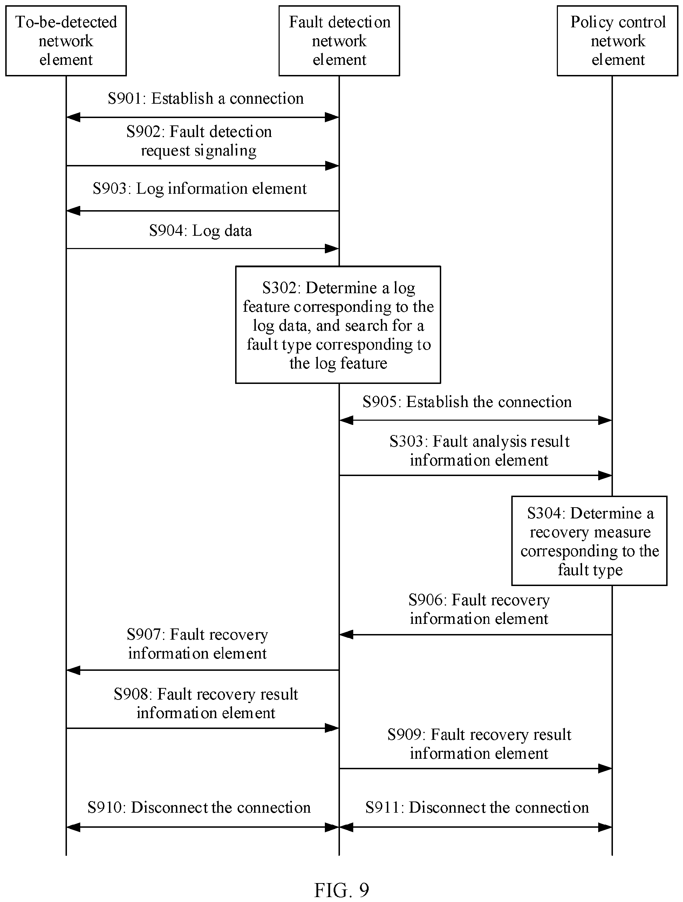

In another possible implementation, the policy control network element does not directly communicate with the to-be-detected network element, but communicates with the to-be-detected network element through the fault detection network element, as shown in FIG. 8. A specific procedure of the network fault detection method is described with reference to the communications architecture shown in FIG. 8, as shown in FIG. 9.

Before the fault detection network element performs the fault detection on the to-be-detected network element, step S901 may be performed.

S901: A fault detection network element establishes a connection to a to-be-detected network element. Specifically, the to-be-detected network element may send status signaling to the fault detection network element, and the status signaling is used to query whether the fault detection network element is in idle state. When the fault detection network element is in idle state, the fault detection network element replies to the to-be-detected network element that a current state is idle, and the fault detection network element establishes the connection to the to-be-detected network element. When the fault detection network element is in busy state, the fault detection network element replies to the to-be-detected network element that a current state is busy. When the fault detection network element replies that the current state is busy, the to-be-detected network element sends the status signaling to the fault detection network element at an interval of third preset duration, until the fault detection network element replies that the current state is idle. The third preset duration may be 5s, 3s, 12s, or the like, or may be another time period. The third preset duration is not specifically limited herein in this embodiment of this application.

Before performing step S301 in which the fault detection network element obtains the log data that is pre-recorded by the to-be-detected network element in the past specified duration when the to-be-detected network element is faulty, the fault detection network element may first perform step S902.

S902: The to-be-detected network element sends fault detection request signaling to the fault detection network element, where the fault detection request signaling is used to request the fault detection network element to perform fault detection on the to-be-detected network element.

In a possible implementation, step S301 in which the fault detection network element obtains the log data that is pre-recorded by the to-be-detected network element in the past specified duration when the to-be-detected network element is faulty may be specifically implemented by performing steps S903 and S904.

S903: The fault detection network element sends a log information element to the to-be-detected network element, where the log information element may carry a requirement of the fault detection network element for the log data, for example, specified duration, a size of the log data, and a sending frequency of the log data.

S904: The to-be-detected network element sends the pre-recorded log data to the policy control network element based on the received log information element.

Optionally, before performing step S303 in which the fault detection network element sends the found fault type to the policy control network element, the fault detection network element may first perform step S905.

S905: The fault detection network element establishes a connection to a policy control network element. Specifically, the fault detection network element may send the status signaling to the policy control network element. When the policy control network element is in idle state, the policy control network element replies to the fault detection network element that a current state is idle, and the fault detection network element establishes the connection to the policy control network element. When the policy control network element is in busy state, the policy control network element replies to the fault detection network element that a current state is busy. When the policy control network element replies that the current state is busy, the fault detection network element sends the status signaling to the policy control network element at an interval of fourth preset duration, until the policy control network element replies that the current state is idle. The fourth preset duration may be 5s, 3s, 12s, or the like, or may be another time period. The fourth preset duration may be the same as the third preset duration, and the fourth preset duration may be different from the third preset duration. The fourth preset duration is not specifically limited herein in this embodiment of this application.

After the policy control network element establishes the connection to the fault detection network element, the fault detection network element may be initialized according to an indication of the policy control network element. For a specific initialization process of the fault detection network element, refer to FIG. 7. Details are not described herein again in this embodiment of this application.

For example, step S305 in which the policy control network element indicates the to-be-detected network element to process, by using the recovery measure, the fault that occurs may be specifically implemented by performing step S906 and S907.

S906: The policy control network element sends a fault recovery information element to the fault detection network element.

S907: The fault detection network element forwards the fault recovery information element to the to-be-detected network element.

After step S907 is performed, step S908 and step S909 may be further performed.

S908: The to-be-detected network element sends a fault recovery result information element to the fault detection network element.

S909: The fault detection network element forwards the fault recovery result information element to the policy control network element.

After step S909 is performed, step S910 and step S911 may be performed.

S910: The fault detection network element disconnects from the to-be-detected network element.

S911: The fault detection network element disconnects from the policy control network element.

Step S910 and step S911 are not strictly performed in a specified sequence. Step S910 may be performed before step S911, or step S911 may be performed before step S910; or step S910 and step S911 may be performed at the same time. This is not specifically limited herein in this embodiment of this application.

If the fault detection network element determines that a fault occurs in the fault detection network element, and consequently cannot send a fault type to the policy control network element, the fault detection network element may broadcast the fault type of the fault detection network element, so that the policy control network element determines a corresponding recovery measure based on the fault type, and indicates the fault detection network element to process, by using the recovery measure, the fault that occurs in the fault detection network element.

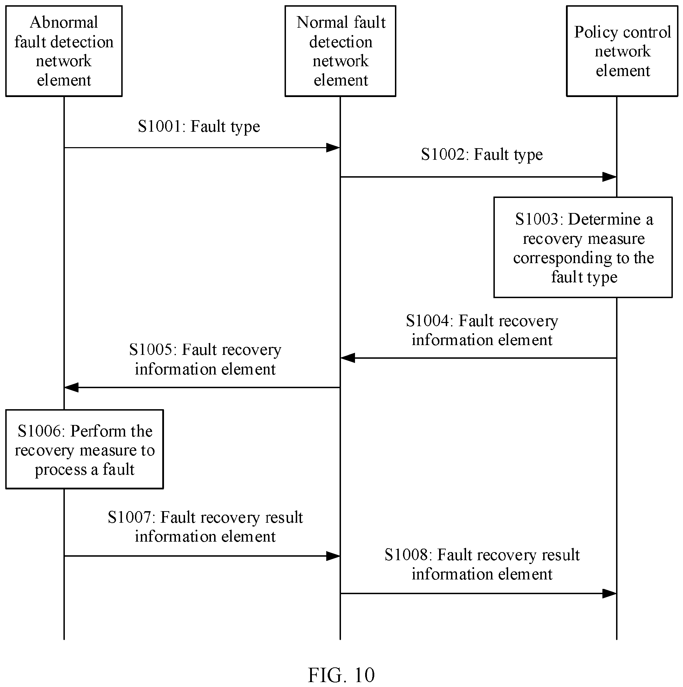

In a possible implementation, when the fault occurs in the fault detection network element, the fault type corresponding to the fault of the fault detection network element may be sent to the policy control network element through a fault detection network element that works properly. For details, refer to steps S1001 to S1008, as shown in FIG. 10.

S1001: A fault detection network element broadcasts a fault type corresponding to a fault that occurs in the fault detection network element. For ease of description, in this embodiment of this application, a fault detection network element in which a fault occurs is referred to as an abnormal fault detection network element, and a fault detection network element that works properly is referred to as a normal fault detection network element.

S1002: When receiving the fault type broadcast by the abnormal fault detection network element, the normal fault detection network element forwards the fault type broadcast by the abnormal fault detection network element to a policy control network element.

S1003: The policy control network element determines a recovery measure based on the fault type.

S1004: The policy control network element sends fault recovery signaling to the normal fault detection network element, where the fault recovery signaling is used to indicate the abnormal fault detection network element to process, based on the recovery measure, the fault that occurs in the abnormal fault detection network element.

S1005: The normal fault detection network element forwards the fault recovery signaling to the abnormal fault detection network element.

S1006: The abnormal fault detection network element processes, based on the recovery measure indicated by the fault recovery signaling, the fault that occurs in the abnormal fault detection network element.

S1007: The abnormal fault detection network element broadcasts fault recovery result signaling, where the fault recovery result signaling is used to notify the policy control network element of a recovery result, and the recovery result is that the fault is successfully cleared, or the recovery result is that the fault fails to be cleared, or the recovery result is that a fault risk is successfully cleared, or the recovery result is that a fault risk fails to be cleared.

S1008: When receiving the fault recovery result signaling broadcast by the abnormal fault detection network element, the normal fault detection network element forwards the fault recovery result signaling to the policy control network element.

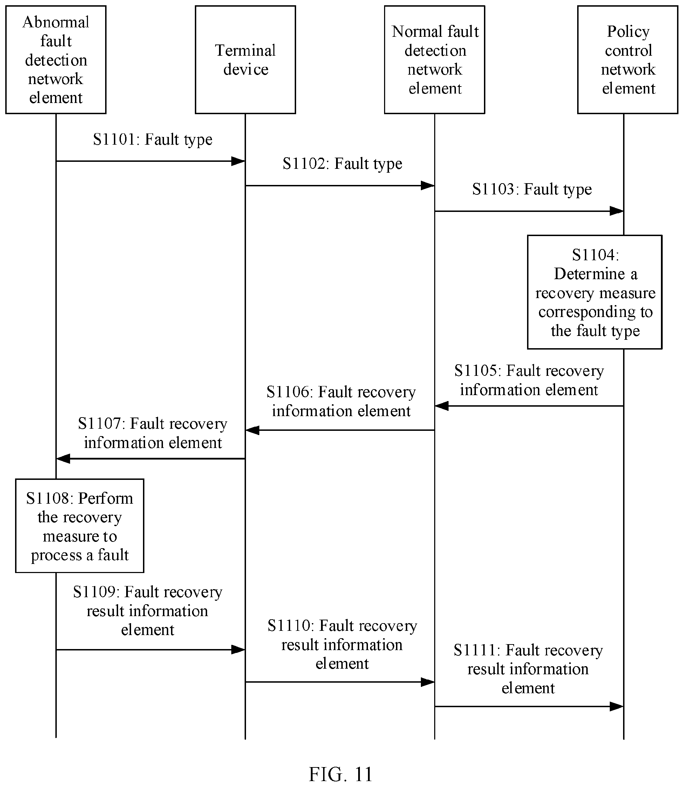

In another possible implementation, when the fault occurs in the fault detection network element, the fault type corresponding to the fault of the fault detection network element may be sent to the policy control network element through a terminal device. For details, refer to S1101 to Sl1l1, as shown in FIG. 11.

S1101: A fault detection network element broadcasts a fault type corresponding to a fault that occurs in the fault detection network element. For ease of description, in this embodiment of this application, a fault detection network element in which a fault occurs is referred to as an abnormal fault detection network element, and a fault detection network element that works properly is referred to as a normal fault detection network element.

S1102: When receiving the fault type broadcast by the abnormal fault detection network element, a terminal device records the fault type, and sends the fault type to the normal fault detection network element.

S1103: The normal fault detection network element forwards the fault type to a policy control network element.

S1104: The policy control network element determines a recovery measure based on the fault type.

S1105: The policy control network element sends fault recovery signaling to the normal fault detection network element, where the fault recovery signaling is used to indicate the abnormal fault detection network element to process, based on the recovery measure, the fault that occurs in the abnormal fault detection network element.

S1106: The normal fault detection network element forwards the fault recovery signaling to the terminal device.

S1107: The terminal device forwards the fault recovery signaling to the abnormal fault detection network element.

S1108: The abnormal fault detection network element processes, based on the recovery measure indicated by the fault recovery signaling, the fault that occurs in the abnormal fault detection network element.

S1109: The abnormal fault detection network element broadcasts fault recovery result signaling.

S1110: After receiving the fault recovery result signaling broadcast by the abnormal fault detection network element, the terminal device sends the fault recovery result signaling to the normal fault detection network element.

S1111: The normal fault detection network element forwards the fault recovery result signaling to the policy control network element.

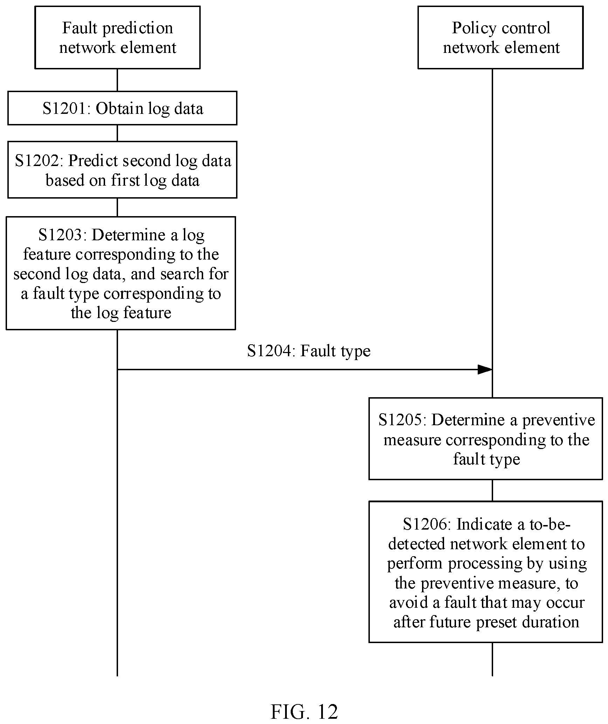

An embodiment of this application provides a network fault prediction method. Referring to FIG. 12, a specific procedure of the network fault prediction method includes the following steps:

S1201: A fault prediction network element obtains log data that is pre-recorded by a to-be-detected network element in past specified duration.

S1202: The fault prediction network element predicts, based on first log data, second log data of the to-be-detected network element obtained after future preset duration.

In a possible implementation, the fault prediction network element may input the obtained first log data into a pre-trained sequence to sequence (sequence to sequence, Seq2Seq) model, to obtain the second log data. The Seq2Seq model may be used to predict, based on the log data in the past specified duration, the log data obtained after the future preset duration.

S1203: The fault prediction network element determines a corresponding log feature based on the second log data, and searches, in a fault relational database, for a fault type corresponding to the log feature, where the fault relational database includes association relationships between different fault types and log features.

In a possible implementation, the fault detection network element may input the second log data into a pre-trained long short-term memory (long short term memory, LSTM) model, to obtain the fault type. The LSTM model may be used to extract the log feature corresponding to the log data, and search, in the fault relational database, for the fault type corresponding to the log feature.

S1204: The fault prediction network element sends the found fault type to a policy control network element.

For example, the fault prediction network element may send a fault analysis result information element to the policy control network element, and the fault analysis result information element may include but is not limited to a function identifier, an analysis time, an analysis location, a fault status, specific fault information, future preset duration, and the like. The function identifier is used to identify a fault prediction function, and the detection time is used to indicate a time at which the fault prediction network element performs fault prediction on the to-be-detected network element. The detection location is used to indicate a location at which the fault prediction network element performs fault prediction on the to-be-detected network element. The fault status is used to identify whether a fault occurs in the to-be-detected network element. The specific fault information includes a fault type that may occur in the to-be-detected network element, and/or whether the fault type being a known fault type, and/or whether the fault type being a software fault or a hardware fault, and so on. The fault analysis result information element may further include a recommended preventive measure and the like.

S1205: The policy control network element determines a corresponding preventive measure based on the received fault type.

S1206: The policy control network element indicates the to-be-detected network element to perform processing by using the preventive measure, to avoid the fault that may occur after the future preset duration.

In this embodiment of this application, a network fault analysis architecture including the policy control network element and the fault prediction network element is provided, and the network fault prediction method is provided based on the architecture. Specifically, the fault prediction network element may predict, based on the obtained log data in the past specified duration, the log data in a future period of time, then, determine a fault type based on the predicted log data, and send the predicted fault type to the policy control network element. The policy control network element may determine the preventive measure based on the received fault type, and the to-be-detected network element may perform processing by executing the recovery measure, to avoid the fault that may occur after the preset duration. According to the network fault prediction method provided in this embodiment of this application, fault prediction can be performed on the to-be-detected network element based on an NF service.

In this embodiment of this application, the log data obtained by the fault prediction network element may be structured data such as ALM, or may be unstructured data such as log data generated by devices that are manufactured by different vendors. A structure of the log data is not limited herein in this embodiment of this application. Because the fault prediction network element has no limitation on a format of the log data, the fault prediction network element may perform fault prediction on network element devices that are manufactured by different vendors, thereby improving universality of the network fault prediction method.

Optionally, when the fault prediction network element searches, in the fault relational database, for the fault type corresponding to the log feature in step S1203, if the fault prediction network element cannot find the fault type corresponding to the log feature in the fault relational database, the fault prediction network element may output the determined log feature, receive the fault type corresponding to the outputted log feature, and input the determined log feature and the received fault type to the fault relational database through learning, to update the fault relational database.

The fault prediction network element may update the fault relational database when receiving an update indication message sent by the policy control network element. In this embodiment of this application, the update indication message may be referred to as a fault knowledge update information element. A process in which the fault prediction network element updates the fault relational database is similar to that in which the fault detection network element updates the fault relational database. For details, refer to FIG. 4. Details are not described herein again in this application.

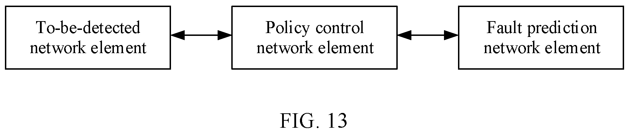

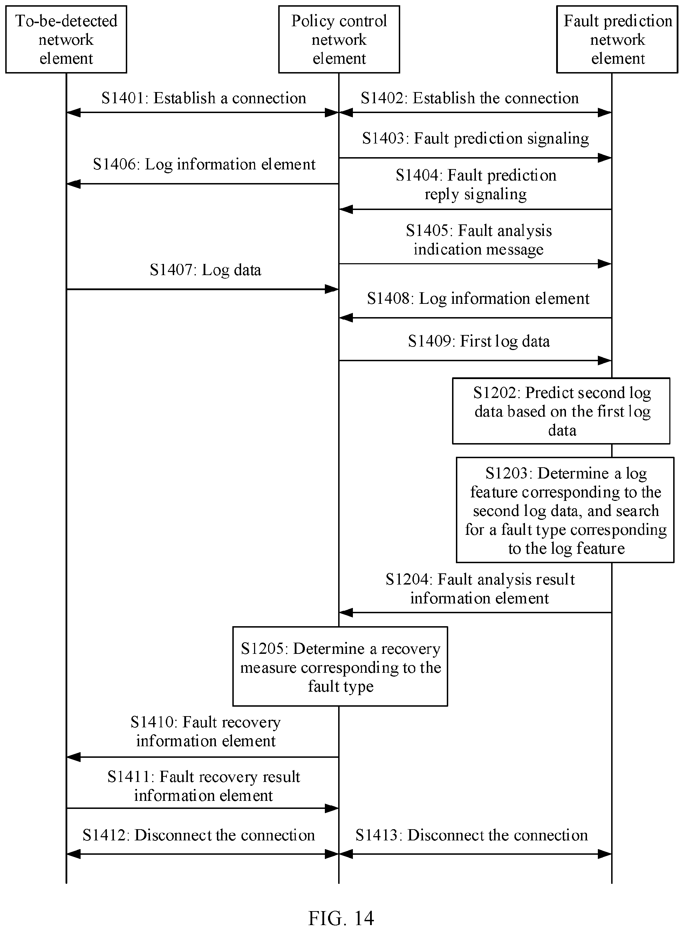

In a possible implementation, the fault prediction network element does not directly communicate with the to-be-detected network element, but communicates with the to-be-detected network element through the policy control network element and the to-be-detected network element, as shown in FIG. 13. A specific procedure of the network fault prediction method is described with reference to the communications architecture shown in FIG. 13, as shown in FIG. 14.

Before the fault prediction network element performs the fault prediction on the to-be-detected network element, step S1401 and step S1402 may be performed.

S1401: A fault prediction network element establishes a connection to a policy control network element. Specifically, the policy control network element may send status signaling to the fault prediction network element. When the fault prediction network element is in idle state, the fault prediction network element replies to the policy control network element that a current state is idle, and the fault prediction network element establishes the connection to the policy control network element. When the fault prediction network element is in busy state, the fault detection network element replies to the policy control network element that a current state is busy. When the fault prediction network element replies that the current state is busy, the policy control network element sends the status signaling to the fault prediction network element at an interval of first preset duration, until the fault prediction network element replies that the current state is idle. The first preset duration may be 5s, 3s, 12s, or the like, or may be another time period. The first preset duration is not specifically limited herein in this embodiment of this application.

S1402: The policy control network element establishes a connection to a to-be-detected network element. Specifically, the policy control network element may send the status signaling to the to-be-detected network element. When the to-be-detected network element is in idle state, the to-be-detected network element replies to the policy control network element that a current state is idle, and the to-be-detected network element establishes the connection to the policy control network element. When the to-be-detected network element is in busy state, the to-be-detected network element replies to the policy control network element that a current state is busy. When the to-be-detected network element replies that the current state is busy, the policy control network element sends the status signaling to the to-be-detected network element at an interval of second preset duration, until the to-be-detected network element replies that the current state is idle. The second preset duration may be 5s, 3s, 12s, or the like, or may be another time period. The second preset duration may be the same as the first preset duration, or the second preset duration may be different from the first preset duration. The second preset duration is not specifically limited herein in this embodiment of this application.

Step S1401 and step S1402 are not strictly performed in a specified sequence. Step S1401 may be performed before step S1402, or step S1402 may be performed before step S1401; or step S1401 and step S1402 may be performed at the same time. This is not specifically limited herein in this embodiment of this application.

After the policy control network element establishes the connection to the fault prediction network element, the fault prediction network element may be initialized according to an indication of the policy control network element. An initialization process of the fault prediction network element is similar to that of the fault detection network element. For details, refer to FIG. 7. Details are not described herein again in this embodiment of this application.

After separately establishing connections to the to-be-detected network element and the fault prediction network element, the policy control network element may perform steps S1403 to S1405.

S1403: The policy control network element sends fault prediction signaling to the fault prediction network element, where the fault prediction signaling is used to indicate the fault prediction network element to perform fault prediction on the to-be-detected network element.

S1404: The fault prediction network element sends fault prediction reply signaling to the policy control network element, where the fault prediction reply signaling is used to indicate the policy control network element to send a fault analysis information element.

S1405: The policy control network element sends the fault analysis information element to the fault prediction network element, where the fault analysis information element may carry at least one of the following information: future preset duration, a function identifier, a detection time, and a detection location.

Certainly, the foregoing steps S1403 and S1404 may not be performed, and after the policy control network element separately establishes the connections to the to-be-detected network element and the fault prediction network element, S1405 is directly performed.

Step S301 in which the fault prediction network element obtains the log data that is pre-recorded by the to-be-detected network element in the past specified duration when the to-be-detected network element is faulty may be specifically implemented by performing steps S1406 to S1409.

S1406: The policy control network element sends a log information element to the to-be-detected network element, where the log information element may carry a requirement of the policy control network element for the log data, for example, specified duration, a size of the log data, and a sending frequency of the log data.

S1407: The to-be-detected network element sends the pre-recorded log data to the policy control network element based on the received log information element.

S1408: The fault prediction network element sends the log information element to the policy control network element, where the log information element may carry a requirement of the fault prediction network element for the log data, for example, specified duration, a size of the log data, and a sending frequency of the log data.

S1409: The policy control network element sends, based on the received log information element, the log data from the to-be-detected network element to the fault prediction network element. In this way, the fault prediction network element obtains first log data.

For example, S1206 in which the policy control network element indicates the to-be-detected network element to process, by using the preventive measure, the fault that occurs may be specifically implemented by performing step S1410.

S1410: The policy control network element sends a fault recovery information element to the to-be-detected network element, where the fault recovery information element may carry a function identifier and a preventive measure identifier, where the function identifier is used to identify a fault prediction function, and the preventive measure identifier is used to identify the preventive measure determined by the policy control network element.

After step S1410 is performed, step S1411 may be further performed.

S1411: The to-be-detected network element sends a fault recovery result information element to the policy control network element, where the fault recovery result information element may carry a function identifier and a recovery result identifier. The function identifier is used to identify a fault prediction function. When the to-be-detected network element successfully performs processing by using the preventive measure determined by the policy control network element, to avoid a fault that may occur after future preset duration, the recovery result identifier is used to identify that recovery succeeds. When the to-be-detected network element fails to perform processing by using the preventive measure determined by the policy control network element, to avoid a fault that may occur after future preset duration, the recovery result identifier is used to identify that recovery fails.

After step S1206 is performed, step S1412 and step S1413 may be performed.

S1412: The policy control network element disconnects from the to-be-detected network element.

S1413: The policy control network element disconnects from the fault prediction network element.

Step S1412 and step S1413 are not strictly performed in a specified sequence. Step S1412 may be performed before step S1413, or step S1413 may be performed before step S1412; or step S1412 and step S1413 may be performed at the same time. This is not specifically limited herein in this embodiment of this application.

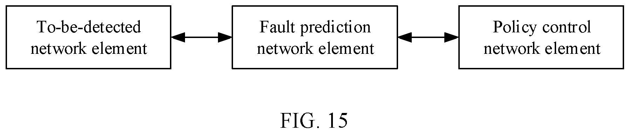

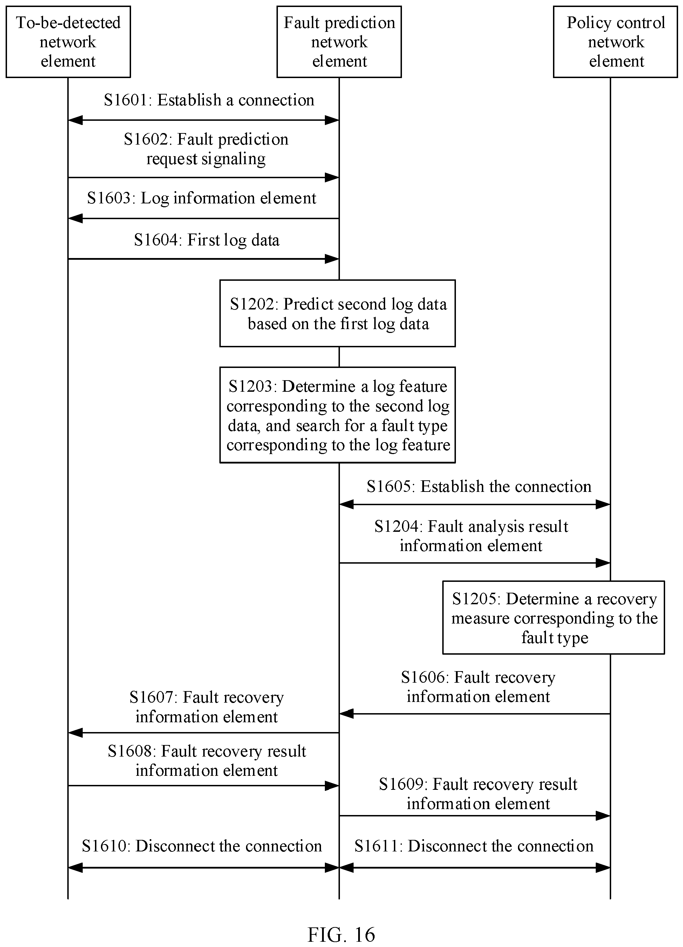

In another possible implementation, the policy control network element does not directly communicate with the to-be-detected network element, but communicates with the to-be-detected network element through the fault prediction network element, as shown in FIG. 15. A specific procedure of the network fault prediction method is described with reference to the communications architecture shown in FIG. 15, as shown in FIG. 16.

Before the fault prediction network element performs the fault prediction on the to-be-detected network element, step S1601 may be performed.

S1601: A fault prediction network element establishes a connection to a to-be-detected network element. Specifically, the to-be-detected network element may send status signaling to the fault prediction network element, and the status signaling is used to query whether the fault prediction network element is in idle state. When the fault prediction network element is in idle state, the fault prediction network element replies to the to-be-detected network element that a current state is idle, and the fault prediction network element establishes the connection to the to-be-detected network element. When the fault prediction network element is in busy state, the fault prediction network element replies to the to-be-detected network element that a current state is busy. When the fault prediction network element replies that the current state is busy, the to-be-detected network element sends the status signaling to the fault prediction network element at an interval of third preset duration, until the fault prediction network element replies that the current state is idle. The third preset duration may be 5s, 3s, 12s, or the like, or may be another time period. The third preset duration is not specifically limited herein in this embodiment of this application.

Before performing step S1201 in which the fault prediction network element obtains the log data that is pre-recorded by the to-be-detected network element in the past specified duration, the fault prediction network element may first perform step S1602.

S1602: The to-be-detected network element sends fault prediction request signaling to the fault prediction network element, where the fault prediction request signaling is used to request the fault prediction network element to perform fault prediction on the to-be-detected network element.

In a possible implementation, step S1201 in which the fault prediction network element obtains the log data that is pre-recorded by the to-be-detected network element in the past specified duration may be specifically implemented by performing steps S1603 and S1604.

S1603: The fault prediction network element sends a log information element to the to-be-detected network element, where the log information element may carry a requirement of the fault prediction network element for the log data, for example, specified duration, a size of the log data, and a sending frequency of the log data.

S1604: The to-be-detected network element sends the pre-recorded log data to the policy control network element based on the received log information element. In this way, the fault prediction network element obtains first log data.

Optionally, before performing step S1204 in which the fault prediction network element sends the found fault type to the policy control network element, the fault prediction network element may first perform step S1605.

S1605: The fault prediction network element establishes a connection to the policy control network element. Specifically, the fault prediction network element may send the status signaling to the policy control network element. When the policy control network element is in idle state, the policy control network element replies to the fault prediction network element that a current state is idle, and the fault prediction network element establishes the connection to the policy control network element. When the policy control network element is in busy state, the policy control network element replies to the fault prediction network element that a current state is busy. When the policy control network element replies that the current state is busy, the fault prediction network element sends the status signaling to the policy control network element at an interval of fourth preset duration, until the policy control network element replies that the current state is idle. The fourth preset duration may be 5s, 3s, 12s, or the like, or may be another time period. The fourth preset duration may be the same as the third preset duration, and the fourth preset duration may be different from the third preset duration. The fourth preset duration is not specifically limited herein in this embodiment of this application.

After the policy control network element establishes the connection to the fault prediction network element, the fault prediction network element may be initialized according to an indication of the policy control network element. An initialization process of the fault prediction network element is similar to that of the fault detection network element. For details, refer to FIG. 7. Details are not described herein again in this embodiment of this application.

For example, step S1206 in which the policy control network element indicates the to-be-detected network element to perform processing by using the preventive measure, to avoid the fault that may occur after the future preset duration may be specifically implemented by performing step S1606 and step S1607.

S1606: The policy control network element sends a fault recovery information element to the fault prediction network element.

S1607: The fault prediction network element forwards the fault recovery information element to the to-be-detected network element.

After step S1607 is performed, steps S1608 and S1609 may be further performed.

S1608: The to-be-detected network element sends a fault recovery result information element to the fault prediction network element.

S1609: The fault prediction network element forwards the fault recovery result information element to the policy control network element.

After step S1609 is performed, step S1610 and step S1611 may be performed.

S1610: The fault prediction network element disconnects from the to-be-detected network element.

S1611: The fault prediction network element disconnects from the policy control network element.

Step S1610 and step S1611 are not strictly performed in a specified sequence. Step S1610 may be performed before step S1611, or step S1611 may be performed before step S1610; or step S1610 and step S1611 may be performed at the same time. This is not specifically limited herein in this embodiment of this application.

If the fault prediction network element determines that a fault occurs in the fault prediction network element, and consequently cannot send a fault type to the policy control network element, the fault prediction network element may broadcast the fault type of the fault prediction network element, so that the policy control network element determines a corresponding recovery measure based on the fault type, and indicates the fault prediction network element to process, by using the recovery measure, the fault that occurs in the fault prediction network element.

In a possible implementation, a processing process of the fault prediction network element when the fault prediction network element is faulty is similar to that of the fault detection network element when the fault detection network element is faulty. For details, refer to FIG. 10; or for details, refer to FIG. 11. Details are not described herein again in this embodiment of this application.

The foregoing mainly describes the solutions provided in the embodiments of the present invention from a perspective of interaction between network elements. It may be understood that, to implement the foregoing functions, the network elements such as the fault detection network element or the policy control network element include corresponding hardware structures and/or software modules for performing the functions. A person of ordinary skill in the art should be easily aware that, in combination with the examples described in the embodiments disclosed in this specification, units and algorithms steps can be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

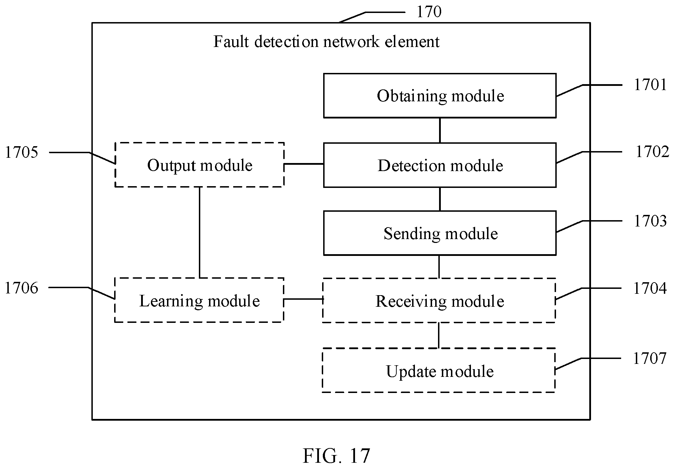

When the fault detection network element implements a corresponding function through a software module, the fault detection network element may include an obtaining module 1701, a detection module 1702, and a sending module 1703, as shown in FIG. 17. The obtaining module 1701 is configured to perform a process of obtaining log data of a to-be-detected network element in FIG. 3 to FIG. 11. The detection module 1702 is configured to perform a process of performing fault detection based on the log data obtained by the obtaining module 1701 in FIG. 3 to FIG. 11. The sending module 1703 is configured to perform a process of sending information to the to-be-detected network element and/or a policy control network element in FIG. 3 to FIG. 11. The network element may further include a receiving module 1704. The receiving module 1704 is configured to perform a process of receiving information sent by the to-be-detected network element and/or the policy control network element in FIG. 3 to FIG. 11. The network element may further include an output module 1705 and a learning module 1706. The output module 1705 is configured to perform a process of outputting a log feature in FIG. 3 to FIG. 11. The learning module 1706 is configured to perform a process of inputting a new log feature and a new fault type to a fault relational database through learning in FIG. 3 to FIG. 11. The network element may further include an update module 1707. The receiving module 1704 may be further configured to perform a process of updating the fault relational database in FIG. 3 to FIG. 11. For details, refer to the methods in the embodiments shown in FIG. 3 to FIG. 11. Details are not described herein again in this application.

In this embodiment of this application, a fault detection function may be implemented in a 5G network, and a network fault analysis architecture including the policy control network element and the fault detection network element is provided. Based on the architecture, the fault detection network element may determine the fault type based on the obtained log data, and send the detected fault type to the policy control network element. In this way, the policy control network element determines the recovery measure, so that the to-be-detected network element can process the fault that occurs by executing the recovery measure.

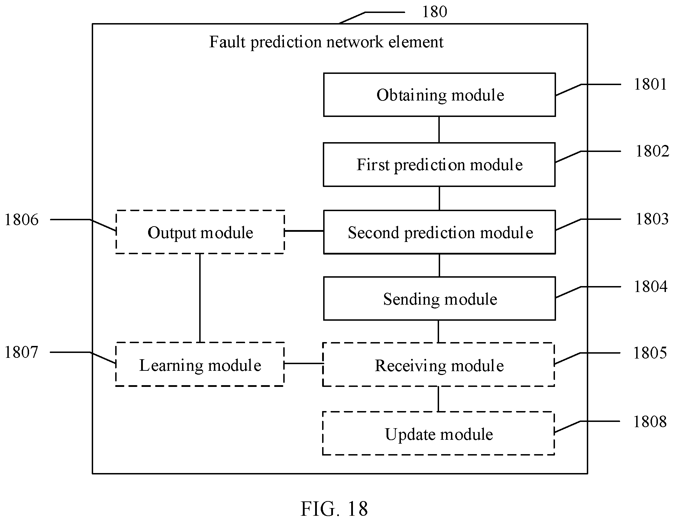

When the fault prediction network element implements a corresponding function through a software module, the fault prediction network element may include an obtaining module 1801, a first prediction module 1802, a second prediction module 1803, and a sending module 1804, as shown in FIG. 18. The obtaining module 1801 is configured to perform a process of obtaining first log data of a to-be-detected network element in FIG. 12 to FIG. 16. The first prediction module 1802 is configured to perform a process of predicting second log data in FIG. 12 to FIG. 16. The second prediction module 1803 is configured to perform a process of predicting a fault type in FIG. 12 to FIG. 16. The sending module 1804 is configured to perform a process of sending information to the to-be-detected network element and/or a policy control network element in FIG. 12 to FIG. 16. The network element may further include a receiving module 1805. The receiving module 1805 is configured to perform a process of receiving information sent by the to-be-detected network element and/or the policy control network element in FIG. 12 to FIG. 16. For details, refer to the methods in the embodiments shown in FIG. 12 to FIG. 16. Details are not described herein again in this application.

In this embodiment of this application, a fault prediction function may be implemented in a 5G network, and a network fault analysis architecture including the policy control network element and the fault prediction network element is provided. Based on the architecture, the fault prediction network element may predict, based on obtained log data in a past period of time, log data in a future period of time, then, determine a fault type based on the predicted log data, and send the predicted fault type to the policy control network element. In this way, the policy control network element determines a recovery measure, so that the to-be-detected network element can perform processing by executing the recovery measure, to avoid the fault that may occur after the preset duration.

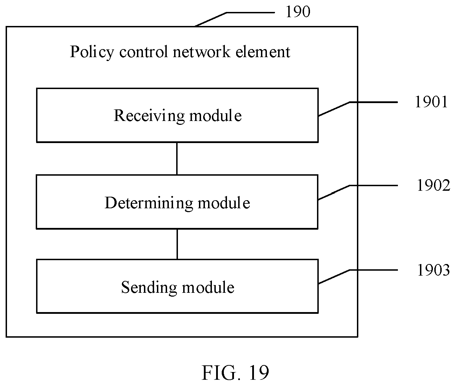

When the policy control network element implements a corresponding function through a software module, the policy control network element may include a receiving module 1901, a determining module 1902, and a sending module 1903, as shown in FIG. 19.

In a possible embodiment, the receiving module 1901 is configured to perform a process of receiving information sent by a to-be-detected network element and/or a fault detection network element in FIG. 3 to FIG. 11. The determining module 1902 is configured to perform a process of determining a recovery measure corresponding to a fault type in FIG. 3 to FIG. 11. The sending module 1903 is configured to perform a process of sending information to the to-be-detected network element and/or the fault detection network element in FIG. 3 to FIG. 11. For details, refer to the methods in the embodiments shown in FIG. 3 to FIG. 11. Details are not described herein again in this application.

In this embodiment of this application, a fault detection function may be implemented in a 5G network, and a network fault analysis architecture including the policy control network element and the fault detection network element is provided. Based on the architecture, the policy control network element may determine the recovery measure based on the fault type sent by the fault detection network element, so that the to -be-detected network element can process the fault that occurs by executing the recovery measure.

In another possible embodiment, the receiving module 1901 is configured to perform a process of receiving information sent by a to-be-detected network element and/or a fault prediction network element in FIG. 12 to FIG. 16. The determining module 1902 is configured to perform a process of determining a preventive measure corresponding to a fault type in FIG. 12 to FIG. 16. The sending module 1903 is configured to perform a process of sending information to the to-be-detected network element and/or the fault prediction network element in FIG. 12 to FIG. 16. For details, refer to the methods in the embodiments shown in FIG. 12 to FIG. 16. Details are not described herein again in this application.

In this embodiment of this application, a fault prediction function may be implemented in a 5G network, and a network fault analysis architecture including the policy control network element and the fault prediction network element is provided. Based on the architecture, the policy control network element may determine the preventive measure based on the fault type sent by the fault prediction network element, so that the to-be-detected network element can perform processing by using the recovery measure, to avoid the fault that may occur after the preset duration.

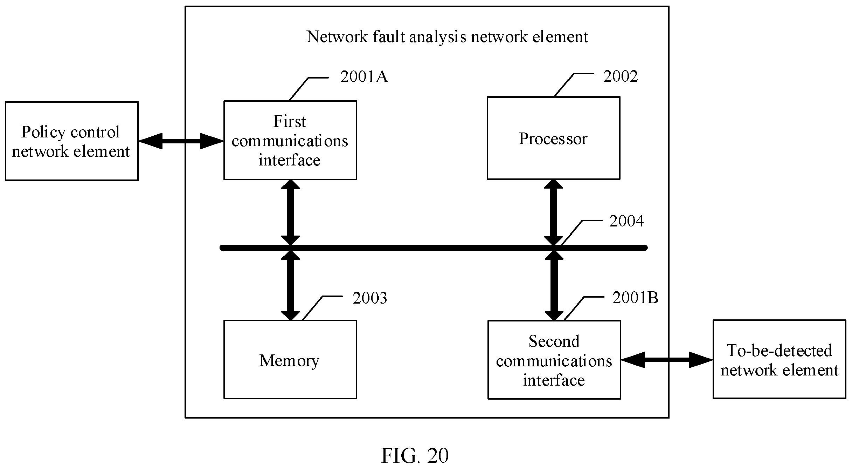

FIG. 20 is another possible schematic structural diagram of a network fault analysis network element in the foregoing embodiments. The network fault analysis network element 200 may be a fault detection network element, or may be a fault prediction network element. The network fault analysis network element 200 includes a processor 2002, a first communications interface 2001A, and a memory 2003. The processor 2002 may be a central processing module (central processing unit, CPU), a digital processing module, or the like. The first communications interface 2001A is configured to perform information sending and receiving with a policy control network element, and the memory 2003 is configured to store a program executed by the processor 2002. The memory 2003 may be further configured to store a fault relational database. The memory 2003 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory 2003 is any other medium that can be configured to carry or store expected program code in a form of an instruction or a data structure and that can be accessed by a computer, but is not limited thereto. The processor 2002 is configured to execute the program code stored in the memory 2003, and is specifically configured to perform processing other than information sending and receiving performed by the fault detection network element or processing other than information sending and receiving performed by the fault prediction network element in the methods in the embodiments shown in FIG. 3 to FIG. 16. For details, refer to the methods in the embodiments shown in FIG. 3 to FIG. 16. Details are not described herein again in this application.

The network fault analysis network element may further include a second communications interface 2001B, and the second communications interface 2001B is configured to perform information sending and receiving with a to-be-detected network element.

A specific connection medium between the first communications interface 2001A, the second communications interface 2001B, the processor 2002, and the memory 2003 is not limited in this embodiment of this application. In this embodiment of this application, the memory 2003, the processor 2002, the first communications interface 2001A, and the second communications interface 2001B are connected through a bus 2004 in FIG. 20. The bus is represented by a bold line in FIG. 20. A manner of connection between other components is merely an example for description, and is not limited thereto. The bus may be classified into an address bus, a data bus, a control bus, and the like. For ease of representation, only one thick line is used to represent the bus in FIG. 20, but this does not mean that there is only one bus or only one type of bus.

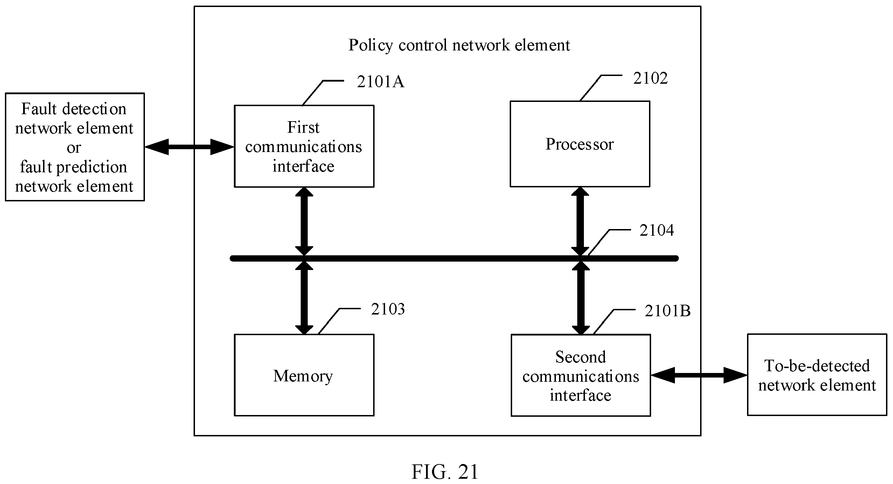

FIG. 21 is another possible schematic structural diagram of a policy control network element 210 in the foregoing embodiments. The policy control network element 210 includes a processor 2102, a first communications interface 2101A, and a memory 2103. The processor 2102 may be a CPU, a digital processing module, or the like. The first communications interface 2101A is configured to perform information sending and receiving with a fault detection network element, or is configured to perform information sending and receiving with a fault prediction network element. The memory 2103 is configured to store a program executed by the processor 2102. The memory 2103 may be a non-volatile memory, for example, an HDD or an SSD, or may be a volatile memory, for example, a RAM. The memory 2103 is any other medium that can be configured to carry or store expected program code in a form of an instruction or a data structure and that can be accessed by a computer, but is not limited thereto. The processor 2102 is configured to execute the program code stored in the memory 2103, and is specifically configured to perform processing other than information receiving and sending performed by the policy control network element in the methods in the embodiments shown in FIG. 3 to FIG. 16. For details, refer to the methods in the embodiments shown in FIG. 3 to FIG. 16. Details are not described herein again in this application.

The policy control network element may further include a second communications interface 2101B, and the second communications interface 2101B is configured to perform information sending and receiving with the to-be-detected network element.

A specific connection medium between the first communications interface 2101A, the second communications interface 2101B, the processor 2102, and the memory 2103 is not limited in this embodiment of this application. In this embodiment of this application, the memory 2103, the processor 2102, the first communications interface 2101A, and the second communications interface 2101B are connected through a bus 2104 in FIG. 21. The bus is represented by a bold line in FIG. 21. A manner of connection between other components is merely an example for description, and is not limited thereto. The bus may be classified into an address bus, a data bus, a control bus, and the like. For ease of representation, only one thick line is used to represent the bus in FIG. 21, but this does not mean that there is only one bus or only one type of bus.

An embodiment of this application further provides a computer-readable storage medium, configured to store a computer software instruction that needs to be executed for execution of the foregoing processing module, and the computer-readable storage medium includes a program that needs to be executed for execution of the foregoing processing module.

An embodiment of this application provides a computer program product including an instruction. When the computer program product is run on a computer, the computer is enabled to perform the network fault analysis methods in FIG. 3 to FIG. 16.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Definitely, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A network fault detection method, wherein the method comprises:
obtaining, by a fault detection network element, log data that is pre-recorded by a to-be-detected network element in past specified duration;
determining, by the fault detection network element, a corresponding log feature based on the log data, and searching, in a fault relational database, for a fault type corresponding to the log feature, wherein the fault relational database comprises association relationships between different fault types and log features; and
if the fault detection network element finds the fault type corresponding to the log feature, sending, by the fault detection network element, the found fault type to a policy control network element, so that the policy control network element determines a corresponding recovery measure based on the fault type, and indicates the to-be-detected network element to process, by using the recovery measure, a fault that occurs.

2. The method according to claim 1, wherein the fault detection network element is further configured to: receive the recovery measure sent by the policy control network element, and send the recovery measure to the to-be-detected network element.

3. The method according to claim 1, wherein the obtaining, by a fault detection network element, log data that is pre-recorded by a to-be-detected network element in past specified duration comprises:
sending, by the fault detection network element, a log data request to the to-be-detected network element, and receiving the log data sent by the to-be-detected network element, wherein the log data request is used to request the log data; or
sending, by the fault detection network element, a log data request to the policy control network element, and receiving the log data sent by the policy control network element.

4. The method according to claim 1, wherein before the searching, by the fault detection network element in a fault relational database, for a fault type corresponding to the log feature, the method further comprises:
receiving, by the fault detection network element, a fault analysis indication message sent by the policy control network element, wherein the fault analysis indication message carries at least one of the following information: a function identifier, a detection time, and a detection location, wherein
the function identifier is used to identify a fault detection function, the detection time is used to indicate a time at which the fault detection network element performs fault detection on the to-be-detected network element, and the detection location is used to indicate a location at which the fault detection network element performs the fault detection on the to-be-detected network element.

5. The method according to any one of claims 1 to 4, further comprising:
outputting, by the fault detection network element, the determined log feature when the fault type corresponding to the log feature is not found in the fault relational database; and
receiving a fault type corresponding to the outputted log feature, and inputting the determined log feature and the received fault type to the fault relational database through learning.

6. The method according to any one of claims 1 to 5, wherein the method further comprises:
receiving, by the fault detection network element, an update indication message sent by the policy control network element, wherein the update indication message is used to indicate the fault detection network element to update the fault relational database; and
updating, by the fault detection network element, the fault relational database.

7. A network fault detection method, wherein the method comprises:
receiving, by a policy control network element, a fault type sent by a fault detection network element, wherein the fault type is determined by the fault detection network element based on log data of a to-be-detected network element in past specified duration when the to-be-detected network element is faulty;
determining, by the policy control network element, a corresponding recovery measure based on the fault type; and
sending, by the policy control network element, the recovery measure to the to-be-detected network element, to indicate the to-be-detected network element to process, by using the recovery measure, a fault that occurs.

8. The method according to claim 7, wherein the sending, by the policy control network element, the recovery measure to the to-be-detected network element comprises:
directly sending, by the policy control network element, the recovery measure to the to-be-detected network element; or
sending, by the policy control network element, the recovery measure to the to-be-detected network element through the fault detection network element.

9. The method according to claim 7 or 8, wherein before the receiving, by a policy control network element, a fault type sent by a fault detection network element, the method further comprises:
receiving, by the policy control network element, a log data request sent by the fault detection network element, wherein the log data request is used to request the log data that is pre-recorded by the to-be-detected network element in the past specified duration; and
sending, by the policy control network element, the log data of the to-be-detected network element to the fault detection network element.

10. The method according to claim 7, wherein before the receiving, by a policy control network element, a fault type sent by a fault detection network element, the method further comprises:
sending, by the policy control network element, a fault analysis indication message to the fault detection network element, wherein the fault analysis indication message carries at least one of the following information: a function identifier, a detection time, and a detection location, wherein
the function identifier is used to identify a fault detection function, the detection time is used to indicate a time at which the fault detection network element performs fault detection on the to-be-detected network element, and the detection location is used to indicate a location at which the fault detection network element performs the fault detection on the to-be-detected network element.

11. The method according to any one of claims 7 to 10, wherein the method further comprises:
sending, by the policy control network element, an update indication message to the fault detection network element, wherein the update indication message is used to indicate the fault detection network element to update the fault relational database.

12. A network fault prediction method, wherein the method comprises:
obtaining, by a fault prediction network element, first log data that is pre-recorded by a to-be-detected network element in past specified duration;
predicting, by the fault prediction network element based on the first log data, second log data of the to-be-detected network element obtained after preset duration;
determining, by the fault prediction network element, a corresponding log feature based on the second log data, and searching, in a fault relational database, for a fault type corresponding to the log feature, wherein the fault relational database comprises association relationships between different fault types and log features; and
sending, by the fault prediction network element, the fault type to a policy control network element, so that the policy control network element determines a corresponding preventive measure based on the fault type, and indicates the to-be-detected network element to perform processing by using the preventive measure, to avoid a fault that may occur after the preset duration.

13. The method according to claim 12, wherein the fault prediction network element is further configured to:
receive a prediction measure sent by the policy control network element, and send the preventive measure to the to-be-detected network element.

14. The method according to claim 12, wherein the obtaining, by a fault prediction network element, first log data that is pre-recorded by a to-be-detected network element in past specified duration comprises:
sending, by the fault prediction network element, a log data request to the to-be-detected network element, and receiving the first log data sent by the to-be-detected network element, wherein the log data request is used to request the first log data; or
sending, by the fault prediction network element, a log data request to the policy control network element, and receiving the first log data sent by the policy control network element.

15. The method according to claim 12, wherein before the predicting, by the fault prediction network element based on the first log data, second log data of the to-be-detected network element obtained after preset duration, the method further comprises:
receiving, by the fault prediction network element, a fault analysis indication message sent by the policy control network element, wherein the fault analysis indication message carries the preset duration, or the fault analysis indication message carries the preset duration and at least one of the following information: a function identifier, a prediction time, and a prediction location, wherein
the function identifier is used to identify a fault prediction function, the prediction time is used to indicate a time at which the fault prediction network element performs fault prediction on the to-be-detected network element, and the prediction location is used to indicate a location at which the fault prediction network element performs the fault prediction on the to-be-detected network element.

16. A fault detection network element, comprising:
a first communications interface, configured to send and receive a message between the fault detection network element and a policy control network element;
a memory, configured to store a computer program; and
a processing module, configured to invoke the computer program stored in the memory, to perform the following steps:
receiving, through the first communications interface or a second communications interface, log data that is pre-recorded by a to-be-detected network element in past specified duration, wherein the second communications interface is configured to send and receive a message between the fault detection network element and the to-be-detected network element;
determining a corresponding log feature based on the obtained log data, and searching, in a fault relational database, for a fault type corresponding to the log feature, wherein the fault relational database comprises association relationships between different fault types and log features; and when the fault type corresponding to the log feature is found, sending the fault type to the policy control network element through the first communications interface, so that the policy control network element determines a corresponding recovery measure based on the fault type, and indicates the to-be-detected network element to process, by using the recovery measure, a fault that occurs.

17. The fault detection network element according to claim 16, wherein when the processing module is configured to obtain the log data that is pre-recorded by the to-be-detected network element in the past specified duration, the fault detection network element is specifically configured to:
send a log data request to the to-be-detected network element through the second communications interface, and receive, through the second communications interface, the log data sent by the to-be-detected network element, wherein the log data request is used to request the log data; or
send a log data request to the policy control network element through the first communications interface, and receive, through the first communications interface, the log data sent by the policy control network element.

18. The fault detection network element according to claim 16, wherein the processing module is further configured to: before searching, in the fault relational database, for the fault type corresponding to the log feature, receive, through the first communications interface, a fault analysis indication message sent by the policy control network element, wherein the fault analysis indication message carries at least one of the following information: a function identifier, a detection time, and a detection location, wherein
the function identifier is used to identify a fault detection function, the detection time is used to indicate a time at which the fault detection network element performs fault detection on the to-be-detected network element, and the detection location is used to indicate a location at which the fault detection network element performs the fault detection on the to-be-detected network element.

19. The fault detection network element according to any one of claims 16 to 18, further comprising an input/output module, wherein
the processing module is further configured to: when the fault type corresponding to the log feature is not found in the fault relational database, output the determined log feature through the input/output module; receive a corresponding fault type that is inputted from the input/output module and that is determined based on the outputted log feature; and input the log feature outputted by the input/output module and the corresponding fault type received from the input/output module to the fault relational database through learning.

20. The fault detection network element according to any one of claims 16 to 19, wherein the processing module is further configured to: receive, through the first communications interface, an update indication message sent by the policy control network element, wherein the update indication message is used to indicate to update the fault relational database; and update the fault relational database based on the update indication message.

21. A policy control network element, comprising:
a first communications interface, configured to send and receive a message between the policy control network element and a fault detection network element;
a memory, configured to store a computer program; and
a processing module, configured to invoke the computer program stored in the memory, to perform the following steps:
receiving, through the first communications interface, a fault type sent by a fault detection network element, wherein the fault type is determined by the fault detection network element based on log data of a to-be-detected network element in past specified duration when the to-be-detected network element is faulty;
determining a corresponding recovery measure based on the fault type received through the first communications interface; and
sending the recovery measure to the to-be-detected network element through the first communications interface or a second communications interface, to indicate the to-be-detected network element to process, by using the recovery measure, a fault that occurs, wherein the second communications interface is used to send and receive a message between the fault detection network element and the to-be-detected network element.

22. The policy control network element according to claim 21, wherein the first communications interface is further configured to: before receiving the fault type sent by the fault detection network element, receive a log data request sent by the fault detection network element, wherein the log data request is used to request the log data of the to-be-detected network element in the past specified duration; and send the log data of the to-be-detected network element to the fault detection network element.

23. The policy control network element according to claim 21, wherein the first communications interface is further configured to: before receiving the fault type sent by the fault detection network element, send a fault analysis indication message to the fault detection network element, wherein the fault analysis indication message carries at least one of the following information: a function identifier, a detection time, and a detection location, wherein
the function identifier is used to identify a fault detection function, the detection time is used to indicate a time at which the fault detection network element performs fault detection on the to-be-detected network element, and the detection location is used to indicate a location at which the fault detection network element performs the fault detection on the to-be-detected network element.

24. The policy control network element according to any one of claims 21 to 23, wherein the first communications interface is further configured to send an update indication message to the fault detection network element, wherein the update indication message is used to indicate the fault detection network element to update a fault relational database.

25. A fault prediction network element, comprising:
a first communications interface, configured to send and receive a message between the fault prediction network element and a policy control network element;
a memory, configured to store a computer program; and
a processing module, configured to invoke the computer program stored in the memory, to perform the following steps:
receiving, through the first communications interface or a second communications interface, first log data that is pre-recorded by a to-be-detected network element in past specified duration, wherein the second communications interface is configured to send and receive a message between the fault detection network element and the to-be-detected network element;
predicting, based on the first log data, second log data of the to-be-detected network element obtained after preset duration; and determining a corresponding log feature based on the second log data, and searching, in a fault relational database, for a fault type corresponding to the log feature, wherein the fault relational database comprises association relationships between different fault types and log features; and
sending the fault type to the policy control network element through the first communications interface, so that the policy control network element determines a corresponding preventive measure based on the fault type, and indicates the to-be-detected network element to perform processing by using the preventive measure, to avoid a fault that may occur after the preset duration.

26. The fault prediction network element according to claim 25, wherein when the processing module is configured to obtain the log data that is pre-recorded by the to-be-detected network element in the past specified duration, the fault prediction network element is specifically configured to:
send a log data request to the to-be-detected network element through the second communications interface, and receive, through the second communications interface, the first log data sent by the to-be-detected network element, wherein the log data request is used to request the first log data; or
send a log data request to the policy control network element through the first communications interface, and receive, through the first communications interface, the first log data sent by the policy control network element.

27. The fault prediction network element according to claim 25, wherein the processing module is further configured to: before predicting, based on the first log data, the second log data of the to-be-detected network element obtained after preset duration, receive, through the first communications interface, a fault analysis indication message sent by the policy control network element, wherein the fault analysis indication message carries the preset duration, or the fault analysis indication message carries the preset duration and at least one of the following information: a function identifier, a prediction time, and a prediction location, wherein
the function identifier is used to identify a fault prediction function, the prediction time is used to indicate a time at which the fault prediction network element performs fault prediction on the to-be-detected network element, and the prediction location is used to indicate a location at which the fault prediction network element performs the fault prediction on the to-be-detected network element.
